# EUROPÄISCHE PATENTSCHRIFT

(11) **EP 2 945 891 B1**
(45) Veröffentlichungstag und Bekanntmachung des Hinweises auf die Patenterteilung: **01.03.2017**
(21) Anmeldenummer: 14700425.3
(22) Anmeldetag: 13.01.2014
(51) Int. Cl.: B65G 47/76

(54) **FÖRDERANLAGE**
CONVEYING DEVICE
INSTALLATION DE TRANSPORT

(30) Priorität: 15.01.2013 CH 161132013
(43) Veröffentlichungstag der Anmeldung: 25.11.2015
(73) Patentinhaber: Ferag AG, 8340 Hinwil (CH)
(72) Erfinder: JAUCH, Fabian, CH-8353 Elgg (CH)
(74) Vertreter: Frei Patent Attorneys
(86) Internationale Anmeldenummer: PCT/CH2014/000005
(87) Internationale Veröffentlichungsnummer: WO 2014/110684

(56) Entgegenhaltungen:
- DE-B3-102007 018 532
- JP-A- 2003 054 741
- US-A- 1 729 671
- US-A- 3 093 236

## Beschreibung

Die Erfindung bezieht sich auf das Gebiet der Fördertechnik. Sie betrifft ein Verfahren zum Fördern von Stückgütern nach dem Oberbegriff des Anspruchs 1, wobei die Stückgüter auf einer durch das Förderorgan einer Fördervorrichtung ausgebildeten Förderfläche entlang einer Förderbahn in einer ersten Förderrichtung gefördert werden und wenigstens einzelne Stückgüter durch wenigstens ein Ablenkorgan einer Ablenkvorrichtung aus der ersten Förderrichtung abgelenkt und einer Übernahmevorrichtung übergeben werden.

Ferner betrifft die Erfindung auch eine Förderanlage nach dem Oberbegriff des Anspruchs 5 mit einer Fördervorrichtung zum Fördern von Stückgütern entlang einer Förderbahn in einer ersten Förderrichtung, wobei die Fördervorrichtung ein Förderorgan enthält, welches eine Förderfläche für die Stückgüter ausbildet, und mit einer Ablenkvorrichtung zum Ablenken wenigstens einzelner, entlang der Förderbahn geförderter Stückgüter aus der ersten Förderrichtung.

Förderanlagen der eingangs genannten Art erfüllen die Aufgabe, Stückgüter von einen Ausgangsort an einen Zielort zu fördern. Eine häufig angetroffene Situation in der Fördertechnik betrifft die Förderung von Stückgütern in einem Förderstrom entlang einer gemeinsamen Förderbahn einer Fördervorrichtung und das Weiterleiten der Stückgüter an unterschiedliche Zielorte oder an unterschiedliche Förderwege.

So müssen beispielsweise Stückgüter aufgrund spezifischer Eigenschaften unterschiedlichen Zielorten in der Förderanlage zugewiesen werden. Solche Eigenschaften können beispielsweise das Gewicht, das Format, der Inhalt, oder die Zustelladresse des Stückgutes sein.

So werden beispielsweise in der Paketsortierung Pakete in einer Förderanlage aufgrund von oben genannten Kriterien sortiert und unterschiedlichen Zielorten in der Förderanlage zugewiesen. Entsprechend werden in der Förderanlage neben Fördervorrichtungen auch Verteil- und Transfervorrichtungen benötigt, welche die Pakete an die entsprechenden Zielorte in der Förderanlage leiten bzw. lenken.

Ferner müssen oftmals Stückgüter aus Qualitätsgründen aus einem Förderstrom ausgeschieden und von den anderen Stückgütern getrennt einem separaten Zielort in der Förderanlage zugeführt werden. Die Förderanlage enthält hierzu eine entsprechende Ausschleusvorrichtung, mit welcher die betroffenen Stückgüter aus dem Förderstrom ausgeschleust und als Ausschuss der weiteren Verwertung zugeführt werden.

Überdies kann gibt es in der Fördertechnik auch Situationen, in welchen einzelne Stückgüter aus einem Förderstrom ausgeschleust werden müssen, weil sie sich nicht an der richtigen Position gemäss einer vorgegebenen Reihenfolge im Förderstrom befinden. Auch in solchen Situationen wird eine Ausschleusvorrichtung benötigt, welche die entsprechenden Stückgüter aus dem Förderstrom ausschleust.

Eine Ausschleusvorrichtung entspricht jedoch im weitesten Sinne einer Verteil- bzw. einer Sortiervorrichtung, gemäss welcher, wie bereits erwähnt, Stückgüter aufgrund spezifischer Eigenschaften, wie Inhalt, Beschaffenheit, Gewicht, Format, Zustelladresse, Qualitätsmerkmale, Position im Förderstrom, unterschiedlichen Zielorten in der Förderanlage zugewiesen werden.

Die Veröffentlichungsschrift DE 103 05 628 A1beschreibt beispielsweise eine Verteileinrichtung für Stückgüter. Diese enthält ein motorisch angetriebenes, endlos um Führungsrollen umlaufendes Ausschleusband mit vertikaler Umlaufachse. Dieses kann zeitlich begrenzt von unterhalb der Förderfläche der Stückgüter nach oben angehoben werden, so dass dieses schräg zur Förderrichtung in die Förderbahn der Stückgüter hineinragt und eine, die Stückgüter auf eine Wegförderstrecke ablenkende Barriere bildet.

Die Veröffentlichungsschrift DD 294 675 A5 beschreibt eine Aussortiervorrichtung für Postgutsendungen. Die Aussortiervorrichtung umfasst einen Aussortierarm, welcher über einen Schwenkarm und einen Antriebsarm über die Förderbahn der Postgutsendungen führbar ist. Der schräg zur Förderrichtung in die Förderbahn ragende Aussortierarm bildet für die Postgutsendungen eine Barriere, wodurch diese auf eine Wegförderstrecke abgelenkt werden.

Die Veröffentlichungsschrift US 3,093,236 beschreibt einen Ablenkmechanismus zum Ablenken von Gegenständen von einem Förderpfad auf einen anderen Förderpfad, wobei der Ablenkmechanismus mit einer Fördervorrichtung zusammenwirkt. Der Ablenkmechanismus enthält zwei diagonal zur Fördervorrichtung und einander gegenüber liegend angeordnete Ablenkorgane. Die Ablenkorgane sind zur Ablenkung von Objekten über Antriebsorgane in die Fördervorrichtung ein- und ausfahrbar.

Die Veröffentlichungsschrift EP 1 908 708 A1 eine Umlenkeinrichtung, welche zwei schwenkbare Umlenkarme enthält, deren Schwenkachsen auf einander gegenüber liegenden Seiten einer Förderfläche angeordnet sind. Die Umlenkarme werden über eine Schwenkbewegung von einer Nicht- Umlenkposition in eine Umlenkposition über die Förderfläche geschwenkt.

Die Veröffentlichungsschrift US 3,093,236 A beschreibt ein Verfahren zum Fördern von Stückgütern nach dem Oberbegriff des Anspruchs 1 und eine Förderanlage nach dem Oberbegriff des Anspruchs 5.

Die Veröffentlichungsschrift JP 2003 054741 A beschreibt eine Ablenkeinrichtung für die Verwendung zusammen mit einem Förderer.

Die aus dem Stand der Technik bekannten Anlagen mit Aussortier-, Ausschleus- bzw. Verteilvorrichtungen weisen den Nachteil auf, dass diese eine beschränkte Verarbeitungsgeschwindigkeit aufweisen. So wird beispielsweise die Fördergeschwindigkeit der im Förderstrom geförderten Stückgüter bzw. der minimale Förderabstand zwischen den Stückgütern durch die Arbeitsgeschwindigkeit der Aussortier-, Ausschleus- bzw. Verteilvorrichtung limitiert.

Die Limitierung der Verarbeitungsgeschwindigkeit rührt daher, dass die Aussortier-, Ausschleus- bzw. Verteilvorrichtung in der Lage sein muss, ein einzelnes Stückgut aus dem Förderstrom auszuscheiden, ohne dass die benachbarten Stückgüter durch diesen Vorgang beeinflusst werden. So kann beispielsweise das Ablenkorgan einer solchen Vorrichtung erst dann in die Förderbahn des Förderstroms bewegt werden, wenn das vorangehende Stückgut den Ablenkbereich bereits passiert hat. Andererseits ragt das Ablenkorgan als Barriere in die Förderbahn, bis das betreffende Stückgut vollständig aus dem Förderstrom ausgeschieden ist.

Ein dem abgelenkten Stückgut unmittelbar nachfolgendes Stückgut darf daher erst in den Ablenkbereich eintreten, wenn dieses keiner Beeinflussung durch das Ablenkorgan ausgesetzt ist.

Die maximale Verarbeitungsgeschwindigkeit entspricht folglich jener Verarbeitungsgeschwindigkeit, bei welcher die Aussortier-, Ausschleus- bzw. Verteilvorrichtung noch in der Lage ist, einzelne Stückgüter aus dem Förderstrom auszulenken, ohne dass das unmittelbar vorauslaufende und nachlaufende Stückgut beeinflusst wird. Die Verarbeitungsgeschwindigkeit der Fördervorrichtung lässt sich folglich ohne Beschädigung der Stückgüter nur mit der Optimierung der Arbeitsgeschwindigkeit der Aussortier-, Ausschleus- bzw. Verteilvorrichtung erhöhen.

Es ist daher Aufgabe der vorliegenden Erfindung, eine Förderanlage der eingangs genannten Art zu schaffen, welche die oben genannten Nachteile behebt. Insbesondere soll die Förderanlage mit einer höheren Verarbeitungsgeschwindigkeit betrieben werden können, als vergleichbare Förderanlagen aus dem Stand der Technik.

Die Aufgabe wird durch ein Verfahren zum Fördern von Stückgütern nach Anspruch 1 und durch eine Förderanlage nach Anspruch 5 gelöst.

Vorteilhafte Weiterbildungen und Ausführungsformen der Erfindung ergeben sich aus den abhängigen Ansprüchen, der Beschreibung und den Zeichnungen. Dabei sind Merkmale der Verfahrensansprüche sinngemäss mit den Vorrichtungsansprüchen kombinierbar und umgekehrt.

Das Verfahren zeichnet sich dadurch aus, dass zum Ablenken eines Stückgutes ein erstes Ablenkorgan der Ablenkvorrichtung aus seiner Ausgangsposition in die Förderbahn bzw. in den Förderweg der Stückgüter bewegt wird. Das erste Ablenkorgan wird hierbei in seine Endposition in der Förderbahn bewegt, welche der Ablenkposition entspricht. Das Stückgut wird durch das erste Ablenkorgan aus der ersten Förderrichtung abgelenkt. Das erste Ablenkorgan lenkt das Stückgut insbesondere wenigstens teilweise aus der Förderbahn heraus.

Ein mit dem ersten Ablenkorgan kooperierendes, zweites Ablenkorgan der Ablenkvorrichtung wird ebenfalls aus seiner Ausgangsposition in die Förderbahn der Stückgüter bewegt und lenkt das vom ersten Ablenkorgan bereits abgelenkte Stückgut zur Übernahmevorrichtung hin. Das zweite Ablenkorgan lenkt insbesondere das durch das erste Ablenkorgan wenigstens teilweise aus der Förderbahn gelenkte Stückgut noch vollständig aus der Förderbahn. Es vervollständigt in diesem Sinne die Ablenkung.

Die Ablenkvorrichtung bildet mit ihren Ablenkorganen in der Förderbahn der Fördervorrichtung einen Ablenkbereich aus.

Die Ablenkorgane werden von einander gegenüber liegenden Seiten in die Förderbahn bewegt.

Das zweite Ablenkorgan kooperiert mit dem ersten Ablenkorgan, indem dieses die vom ersten Ablenkorgan abgelenkten Stückgüter übernimmt. Das zweite Ablenkorgan kooperiert ferner mit der Übernahmevorrichtung, indem dieses die Stückgüter an die Übernahmevorrichtung weiterleitet bzw. an diese übergibt. Die Ausgangsposition der Ablenkorgane zeichnet sich dadurch aus, dass das Ablenkorgan ausserhalb der Förderbahn der Stückgüter angeordnet ist. Das heisst, das Ablenkorgan liegt in der Ausgangsposition ausserhalb des Einflussbereichs der vorbei geförderten Stückgüter und kann daher auf diese keinen Einfluss nehmen. Die Ablenkpositionen der Ablenkorgane bildet neben den Ausgangspositionen die zweite Endposition der Ablenkorgane, in welcher diese zumindest schräg zur ersten Förderrichtung in die Förderbahn der Stückgüter ragen.

Unter dem Begriff "schräg" sind im weitesten Sinne sämtliche Eingriffsrichtungen der Ablenkorgane ausser parallel zur ersten Förderrichtung gemeint.

Das erste und/oder zweite Ablenkorgan zeichnet sich bevorzugt dadurch aus, dass diese die Stückgüter lediglich leiten bzw. lenken und insbesondere nicht im Förderweg fixieren.

Die Ablenkorgane enthalten bevorzugt wenigstens ein Leitelement. Das Leitelement enthält wenigstens einen den abzulenkenden Stückgütern zugewandten Leitabschnitt, z.B. in Form einer Leitfläche, Leitkante oder Leitlinie, durch welchen die abzulenkenden Stückgüter abgelenkt werden. Die Ablenkorgane bzw. deren Leitelemente üben auf das abzulenkende Stückgut Kräfte aus, welche dieses aus der ersten Förderrichtung ablenken.

Das Leitelement bzw. dessen Leitabschnitt bildet mit der Förderrichtung der Fördervorrichtung in Ablenkposition der Ablenkorgane zweckmässig einen Winkel von 10° bis 80°, insbesondere 20° bis 60° und besonders bevorzugt 40° bis 50° aus. Das Leitelement ist in Förderrichtung betrachtet insbesondere zur Übernahmevorrichtung hin gerichtet.

Ist die Übernahmevorrichtung, wie nachfolgend beschrieben, eine weitere Fördervorrichtung, so verläuft das Leitelement des ersten Ablenkorgans in der Ablenkposition, und gegebenenfalls sowohl in der Ausgangs- als auch in der Ablenkposition, insbesondere parallel zur Förderrichtung der Übernahmevorrichtung.

Das Leitelement des zweiten Ablenkorgans verläuft in der Ausgangsposition und gegebenenfalls sowohl in der Ausgangs- als auch in der Ablenkposition insbesondere parallel zur Förderrichtung der Übernahmevorrichtung.

Das Leitelement des zweiten Ablenkorgans ist in Förderrichtung betrachtet gegenüber dem Leitelement des ersten Ablenkorgans insbesondere stromabwärts angeordnet, wenn sich die beiden Ablenkorgane in Ablenkposition befinden.

Die Leitelemente des ersten und zweiten Ablenkorgans bilden in der Ablenkposition der Ablenkorgane insbesondere ein kombiniertes Leitelement aus. Dieses bildet insbesondere einen kombinierten Leitabschnitt aus.

Das Leitelement des zweiten Ablenkorgans kann unmittelbar an das Leitelement des ersten Ablenkorgans anschliessen oder einen Abstand zu dieser aufweisen, wenn sich die beiden Ablenkorgane in Ablenkposition befinden.

Das erste und zweite Ablenkorgan bzw. deren Leitelemente können auch in den in der Ablenkposition einander zugewandten Endabschnitten so ausgestaltet sein, dass diese in der Ablenkposition kammartig ineinandergreifen und so ein durchgehendes, kombiniertes Leitelement mit einem durchgehenden Leitabschnitt ausbilden. Die besagten Endabschnitte können kammartig angeordnete Finger bzw. Zinken aufweisen.

Das Ablenkorgan bzw. dessen Leitelement kann als Ablenkarm ausgebildet sein.

Das Leitelement des ersten und/oder zweiten Ablenkorgans kann einen umlaufenden, flexiblen Abweiskörper enthalten. Der Abweiskörper wird auf der Ablenkseite insbesondere in Ablenkrichtung bewegt. Der Abweiskörper kann direkt, z. B. motorisch, angetrieben sein. Der Abweiskörper kann indirekt, über das abzulenkende Stückgut angetrieben sein.

Der Abweiskörper unterstützt die Ablenkung der Stückgüter. Ist der Abweiskörper direkt angetrieben, so hat dieser die Funktion eines Beschleunigungselements. Die Stückgüter können auf diese Weise in Ablenkrichtung beschleunigt werden, wodurch der Ablenkvorgang weniger Zeit beansprucht.

Der Abweiskörper kann um Umlenkmittel, wie Umlenkrollen, umlaufend geführt sein. Die Umlenkmittel bzw. die Umlenkrollen bilden insbesondere eine oder Umlenkachsen aus. Die Umlenkachsen sind insbesondere senkrecht zur Förderfläche ausgerichtet. Die Umlenkachsen sind insbesondere vertikal zur Förderfläche ausgerichtet.

Der Abweiskörper ist insbesondere als Abweisband ausgebildet. Der Abweiskörper kann insbesondere eine Schlaufe bzw. Endlosschlinge ausbilden. Der Abweiskörper kann auch als Kette, seilförmiges Element oder Riemen ausgebildet sein.

Der Abweiskörper kann auch ein oder mehrere Abweisbänder, Ketten, seilförmige Elemente oder Riemen beinhalten. Diese sind insbesondere parallel zueinander angeordnet.

Der Abweiskörper bildet insbesondere einen bewegten bzw. bewegbaren Leitabschnitt für die umzuleitenden bzw. abzulenkenden Stückgüter aus.

Der den Leitabschnitt ausbildende Abschnitt des Abweiskörper weist bevorzugt eine zur Übernahmevorrichtung gerichtete Bewegungsrichtung auf.

Zum direkten Antrieb des Abweiskörpers können die Umlenkmittel, wie Umlenkrollen, motorisch angetrieben sein.

Der Abweiskörper kann zur Ablenkseite hin durch eine Mehrzahl von nebeneinander angeordneten Rollen abgestützt sein. Der Abweiskörper kann insbesondere um eine am Leitelement angeordnete Abstützvorrichtung geführt sein, welche einen Rollenkörper mit einer Vielzahl von Rollen aufweist.

Der Rollenkörper ist z. B. so ausgestaltet, dass dieser auf einer Seite mit den Rollen entlang einer nicht kreisförmigen Umlaufbahn entlang eines Stützkörpers abrollt. Auf der gegenüber liegenden Seite stützt der Rollenkörper den Abweiskörper, indem die Rollen direkt oder indirekt am Abweiskörper abrollen. Die Rollen des Rollenkörpers sind z. B. mit einem flexiblen Verbindungskörper miteinander verbunden und voneinander beabstandet. Die Rollen sind hier axial nicht gelagert. Eine solche Abstützvorrichtung ist beispielsweise in der Publikationsschrift WO 2010/148523 beschrieben.

Die Abstützvorrichtung kann jedoch auch axial gelagerte Rollen enthalten, entlang welchen der Abweiskörper abrollt. Die axial gelagerten Rollen sind gemäss dieser Ausführungsvariante stationär gelagert.

Der direkt antreib- und bewegbare Abweiskörper dient insbesondere der Ausübung einer Kraft auf das abzulenkende Stückgut. Diese Kraft dient der Ablenkung des Stückgutes zur Übernahmevorrichtung hin, insbesondere zum Beschleunigen oder Bremsen des Stückgutes in seiner Ablenkung.

Ein direkt oder indirekt angetriebener Abweiskörper dient der Reduktion der Reibung zwischen Stückgut und dem Leitabschnitt.

Am Abweiskörper können Mitnehmer angebracht sein, welche auf das Stückgut einwirken und dieses z. B. in Ablenkrichtung beschleunigen. Die Mitnehmer sind insbesondere zur Ablenkseite hin am Abweiskörper angebracht. Die Mitnehmer sind mit dem Abweiskörper umlaufend angeordnet.

Die Mitnehmer können z. B. in Form von Anschlagelementen, wie Nocken oder Haken, ausgebildet sein, welche am Stückgut anschlagen und dieses so in Ablenkrichtung schieben. Die Mitnehmer können auch als Saugnäpfe ausgebildet sein. Die Saugnäpfe saugen sich an der Oberfläche des Stückgutes fest und ziehen dieses in Ablenkrichtung mit.

Das erste und das zweite Ablenkorgane sind als Translationselement ausgebildet, wobei dieses in einer Translationsbewegung, also in einer linearen Bewegung, von der Ausgangsposition in die Förderbahn der Stückgüter bewegt wird.

Die Ausrichtung des Leitabschnittes relativ zur Förderrichtung bleibt z. B. zwischen der Ausgangsposition und der Ablenkposition unverändert.

Die Richtung der Translationsbewegung ist senkrecht zur Förderrichtung der Fördervorrichtung, d.h. Bandförderers.

Das Translationselement ist insbesondere als Schieberelement ausgebildet, welches in einer Linearbewegung in die Förderbahn der Stückgüter bewegt wird.

Das Translationselement kann z. B. schienengeführt sein. Das Translationselement kann auch teleskopierbar ausgebildet sein und in einer Teleskopierbewegung in die Förderbahn hinein und wieder aus dieser heraus bewegbar sein.

Das erste und zweite Ablenkorgan wird in einem Winkel von weniger als 80° und mehr als 10° (Winkelgrad) zur ersten Förderrichtung in die Förderbahn der Stückgüter bewegt. Der Winkel beträgt bevorzugt 30° bis 60° und insbesondere 40° bis 50°.

Gemäss einer Weiterbildung der Erfindung wird das jeweilige Ablenkorgan bzw. dessen Leitelement und insbesondere das erste Ablenkorgan in den Förderabstand zwischen zwei Stückgüter hinein bewegt und gemeinsam mit dem Förderabstand zum Ablenkbereich hin bewegt, bis das betreffende Ablenkorgan bzw. dessen Leitelement seine Ablenkposition im Ablenkbereich erreicht hat.

Die Förderanlage zur Durchführung des Verfahrens enthält entsprechend eine Fördervorrichtung zum Fördern von Stückgütern entlang der Förderbahn in der ersten Förderrichtung. Die Fördervorrichtung enthält ein Förderorgan, welches die Förderfläche für die Stückgüter ausbildet. Ferner enthält die Förderanlage eine Ablenkvorrichtung zum Ablenken wenigstens einzelner, entlang der Förderbahn geförderter Stückgüter aus der ersten Förderrichtung.

Die Ablenkvorrichtung enthält ein erstes und zweites Ablenkorgan. Das erste Ablenkorgan ist im Stande, sich aus seiner Ausgangsposition in die Förderbahn der Stückgüter zu bewegen und einzelne Stückgüter aus der ersten Förderrichtung abzulenken.

Das zweite Ablenkorgan ist im Stande, sich aus seiner Ausgangsposition in die Förderbahn der Stückgüter zu bewegen und mit dem ersten Ablenkorgan zu kooperieren, um die vom ersten Ablenkorgan abgelenkten Stückgüter zu übernehmen und an eine Übernahmevorrichtung weiterzuleiten.

Die Stückgüter liegen bevorzugt auf der durch das Förderorgan ausgebildeten Förderfläche auf. Die Förderfläche kann z. B. eine Förderebene sein. Die Fördervorrichtung kann z. B. ein Bandförderer mit einem Förderband als Förderorgan, ein Gurtförderer mit einem Fördergurt als Förderorgan, ein Plattenkettenförderer mit miteinander verketteten Plattenelementen als Förderorgan oder ein Rollenförderer mit Förderrollen als Förderorgan, welche eine Rollenbahn ausbilden, sein.

Entsprechend kann die Förderfläche eine physische Fläche, wie sie z. B. durch das Förderband oder die Plattenkette ausgebildet wird, oder eine geometrische Fläche sein, wie sie beispielsweise durch die Auflagelinien der Rollen eines Rollenförderers ausgebildet wird, wobei die Auflagelinien der Rollen in der geometrischen Förderfläche liegen.

Das erste und zweite Ablenkorgan sind entlang der ersten Förderrichtung hintereinander angeordnet. Das zweite Ablenkorgan ist gegenüber dem ersten Ablenkorgan stromabwärts angeordnet.

Die Ablenkorgane bzw. deren Leitelemente werden hierbei von der Seite in die Förderbahn bewegt. Die beiden Ablenkorgane bzw. deren Leitelemente werden dabei bevorzugt zeitlich versetzt aufeinander zu bewegt.

Das Förderorgan der Fördervorrichtung wird in der Ausgangsposition der Ablenkorgane insbesondere zwischen den beiden Ablenkorganen hindurch geführt.

Die Übernahmevorrichtung ist bevorzugt auf einer Seite der Fördervorrichtung angeordnet.

Das zweite Ablenkorgan, welches in Ablenkposition die Stückgüter zur Übernahmevorrichtung lenkt, ist vorzugsweise auf der Seite der Übernahmevorrichtung angeordnet.

Die Übernahmevorrichtung ist bevorzugt ebenfalls eine Fördervorrichtung, nachfolgend zweite Fördervorrichtung genannt, zum Weiterfördern der abgelenkten Stückgüter entlang einer zweiten Förderbahn in einer zweiten Förderrichtung. Die zweite Förderrichtung kann der ersten Förderrichtung entsprechen oder in einem Winkel zu dieser verlaufen.

Die zweite Fördervorrichtung enthält hierzu ein zweites Förderorgan, welches vorzugsweise eine Förderfläche für die abgelenkten Stückgüter ausbildet. Die Förderfläche kann insbesondere eine Förderebene sein.

Die zweite Fördervorrichtung kann z. B. ein Bandförderer mit einem Förderband als Förderorgan, ein Gurtförderer mit einem Fördergurt als Förderorgan, ein Plattenkettenförderer mit zueinander verketteten Plattenelementen als Förderorgan oder ein Rollenförderer mit Förderrollen als Förderorgan, welche eine Rollenbahn ausbilden, sein.

Die Förderanlage kann eine oder eine Mehrzahl von in Serie nacheinander entlang der Förderbahn der ersten Fördervorrichtung angeordnete Ablenkvorrichtungen und entsprechende Übernahmevorrichtungen enthalten.

Die Stückgüter werden beispielsweise in einem Förderstrom entlang ihrer Förderbahn von der Fördervorrichtung gefördert. Die Stückgüter sind hierbei im Förderstrom bevorzugt entlang der ersten Förderrichtung voneinander beabstandet angeordnet.

Das erste und zweite Ablenkorgan werden in Ausübung des erfindungsgemässen Verfahrens insbesondere zeitlich versetzt aktiviert. "Aktivieren" bedeutet ein zeitliches versetztes in Bewegung versetzen der Ablenkorgane. Die Aktivierung der Ablenkorgane erfolgt insbesondere über eine Steuerungseinrichtung.

Das erste und zweite Ablenkorgan werden insbesondere zeitlich versetzt in die Förderbahn der Stückgüter bewegt.

Die zeitlich versetzte Bewegung der Ablenkorgane bedeutet, dass diese zur gleichen Zeit unterschiedliche Geschwindigkeiten, Beschleunigungen und/oder Bewegungsrichtungen aufweisen.

So wird das erste Ablenkorgan zu Beginn des Ablenkverfahrens von einer ersten Seite der Fördervorrichtung in die Förderbahn der Stückgüter bewegt. Das ausgehend vom ersten Ablenkorgan stromaufwärts nächst folgende Stückgut läuft auf das erste Ablenkorgan auf. Das erste Ablenkorgan lenkt nun das Stückgut zum zweiten Ablenkorgan hin ab. Das zweite Ablenkorgan wird hierbei zeitlich versetzt von einer gegenüber liegenden, zweiten Seite in die Förderbahn der Stückgüter bewegt. Das zweite Ablenkorgan übernimmt das abgelenkte Stückgut und lenkt dieses zur Übernahmevorrichtung hin.

Während nun das zweite Ablenkorgan das abgelenkte Stückgut zur Übernahmevorrichtung lenkt, wird das erste Ablenkorgan von seiner Ablenkposition in der Förderbahn der Stückgüter bevorzugt bereits wieder in die Ausgangsposition zurück bewegt.

Spätestens wenn das abgelenkte Stückgut an die Übernahmevorrichtung übergeben ist, wird auch das zweite Ablenkorgan zum ersten Ablenkorgan zeitlich versetzt ebenfalls aus seiner Ablenkposition in der Förderbahn der Stückgüter wieder in seine Ausgangsposition zurück bewegt.

Das zweite Ablenkorgan kann auch gleichzeitig mit dem Ablenken des Stückgutes aus der Förderbahn zur Übernahmevorrichtung hin aus der Förderbahn der Fördervorrichtung in seine Ausgangsposition zurückbewegt werden. Das zweite Ablenkorgan kann insbesondere synchron mit dem abgelenkten Stückgut in Richtung seiner Ausgangsposition zurück bewegt werden.

Die erfindungsgemässe Förderanlage und das dazugehörige Verfahren eignet sich beispielsweise zum Sortieren, Umleiten bzw. Verteilen von in einer Fördervorrichtung entlang einer gemeinsamen Förderbahn geförderten Stückgütern. Ferner eignet sich die erfindungsgemässe Förderanlage und das dazugehörige Verfahren auch zum Ausschleusen, Aussortieren bzw. Ausscheiden einzelner Stückgüter aus einem Förderstrom von Stückgütern.

Die Stückgüter sind einzelne, voneinander physisch abgegrenzte Fördereinheiten. Diese bilden beispielsweise zueinander einen Förderabstand aus und werden voneinander beabstandet entlang der Förderbahn gefördert.

Das jeweilige Ablenkorgan bzw. dessen Leitelement wird nun zwischen zwei Stückgüter, insbesondere in den Förderabstand zwischen zwei Stückgütern hinein bewegt.

Die Stückgüter können Gebinde aus zusammengefassten und miteinander verbundenen Produkten sein. Die Stückgüter können beispielsweise Pakete oder Koffer sein. Die Stückgüter können auch Lebensmittel sein. Ferner können die Stückgüter auch zu Gebinden zusammengefasste Druckereiprodukte sein.

Die erfindungsgemässe Förderanlage findet z. B. Verwendung bei Herstellungsprozessen. Ferner kann die erfindungsgemässe Förderanlage auch Verwendung in der Lagerbewirtschaftung, im Versandhandel und generell in Sortiereinrichtungen finden.

So können die Stückgüter z. B. Produkte sein, welche z. B. aus einem Produktlager abgerufen, einer gemeinsamen Fördervorrichtung übergeben und auf dieser gefördert und mittels einer oder mehrerer in Serie geschalteter Ablenkvorrichtungen einzelnen Übergabevorrichtungen zugewiesen werden.

Die Ablenkvorrichtung, insbesondere deren Ablenkorgane, sowie die Fördervorrichtung und die Übernahmevorrichtung werden jeweils von einer Steuerungseinrichtung gesteuert. Die Ablenkvorrichtung sowie die Fördervorrichtung und die Übernahmevorrichtung werden vorteilhaft über eine gemeinsame Anlagcnsteuerung gesteuert.

Ferner kann die Förderanlage Messeinrichtungen zur Erfassung von Eigenschaften der Stückgüter enthalten. Die Messeinrichtungen enthalten insbesondere Sensoren, z. B. optische Sensoren.

Die von den Sensoren erfassten Eigenschaftsinformationen werden durch die Steuerungseinrichtung ausgewertet. Diese leitet aus den ausgewerteten Eigenschaftsinformationen Steuerbefehle zum Ablenken von Stückgütern ab, welche an die entsprechende Ablenkvorrichtung übermittelt werden.

Die Eigenschaftsinformationen können z. B. Qualitätsinformationen, Formatinformationen, Zustelladressen, Gewicht, Lücken im Förderstrom, Orientierung der Stückguter auf dem Förderorgan, die Position des Stückgutes auf dem Förderorgan, etc. sein. Die Position der Stückgüter auf dem Förderorgan kann z. B. durch Erfassen von Vor- und/oder Nachlaufkanten der Stückgüter ermittelt werden.

Die erfindungsgemässe Förderanlage und das dazugehörige Verfahren weisen den Vorteil auf, dass die Stückgüter mit einer höheren Verarbeitungsgeschwindigkeit verarbeitet werden können. Dies ist deshalb möglich, weil der Absenkvorgang durch zwei miteinander kooperierende und zeitlich versetzt sowie aufeinander zu in die Förderbahn der Stückgüter bewegte Ablenkorgane und nicht nur durch ein einziges Ablenkorgan ausgeführt wird.

Die Ablenkorgane können durch eine gemeinsame Antriebseinrichtung oder durch unabhängige Antriebseinrichtungen unabhängig voneinander angetrieben werden.

Dabei ragt jedes Ablenkorgan nur über eine Teilstrecke zumindest schräg zur Förderrichtung in die Förderbahn der Stückgüter hinein. So greift beispielsweise das erste und/oder zweite Ablenkorgan bis maximal in die Mitte der Förderbahn bzw. der Förderfläche, insbesondere bis maximal 1/3 bis 1/2 der Förderbahn bzw. der Förderfläche des Förderorgans ein. Dadurch lassen sich die Ablenkorgane vergleichsweise schnell und insbesondere zeitlich versetzt aus ihre Ausgangsposition in die Ablenkposition bewegen und umgekehrt.

Ferner weist die Aufteilung des Ablenkvorganges auf zwei miteinander zeitlich versetzt kooperierende Ablenkorgane den Vorteil auf, dass ein erstes, gegenüber dem zweiten Ablenkorgan in der Ablenkposition stromaufwärts angeordnetes Ablenkorgan zum Freigeben eines Teils der Förderbahn für das, dem abgelenkten Stückgut unmittelbar nachfolgende Stückgut bereits wieder aus der Förderbahn in seine Ausgangsposition zurück bewegt werden kann, während das zweite, gegenüber dem ersten Ablenkorgan in der Ablenkposition weiter stromabwärts angeordnete Ablenkorgan das abgelenkte Stückgut zur Übernahmevorrichtung leitet bzw. lenkt.

Im Folgenden wird der Erfindungsgegenstand anhand von besonderen Ausführungsbeispielen, welche in den beiliegenden Figuren dargestellt sind, näher erläutert. Es zeigen jeweils schematisch:
- Figur 1a - 1f:: ein erstes Ausführungsbeispiel einer Förderanlage;
- Figur 2a - 2c:: ein zweites Ausführungsbeispiel einer Förderanlage;
- Figur 3a - 3f:: ein drittes Ausführungsbeispiel einer Förderanlage;
- Figur 4a - 4c:: ein viertes Ausführungsbeispiel einer Förderanlage;
- Figur 5a - 5g: ein fünftes Ausführungsbeispiel einer Förderanlage;
- Figur 6a - 6e: ein Ausführungsbeispiel einer erfindungsgemässen Förderanlage;
- Figur 7a - 7d: Ausführungsbeispiele von Abweisorganen einer erfindungsgemässen Förderanlage.

Grundsätzlich sind in den Figuren gleiche Teile mit gleichen Bezugszeichen versehen. Das erfindungsgemässe Verfahren zum Fördern von Stückgütern wird durch die Merkmale des Anspruchs 1 und die erfindungsgemässe Förderanlage durch die Merkmale des Anspruchs 5 definiert. Weitere Ausführungsformen der Erfindung ergeben sich aus den abhängigen Ansprüchen.

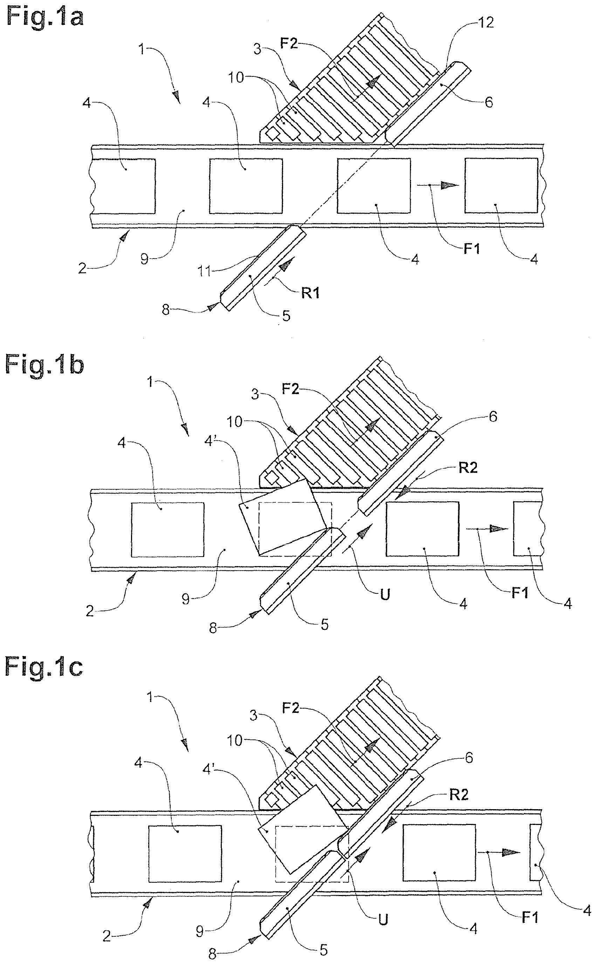

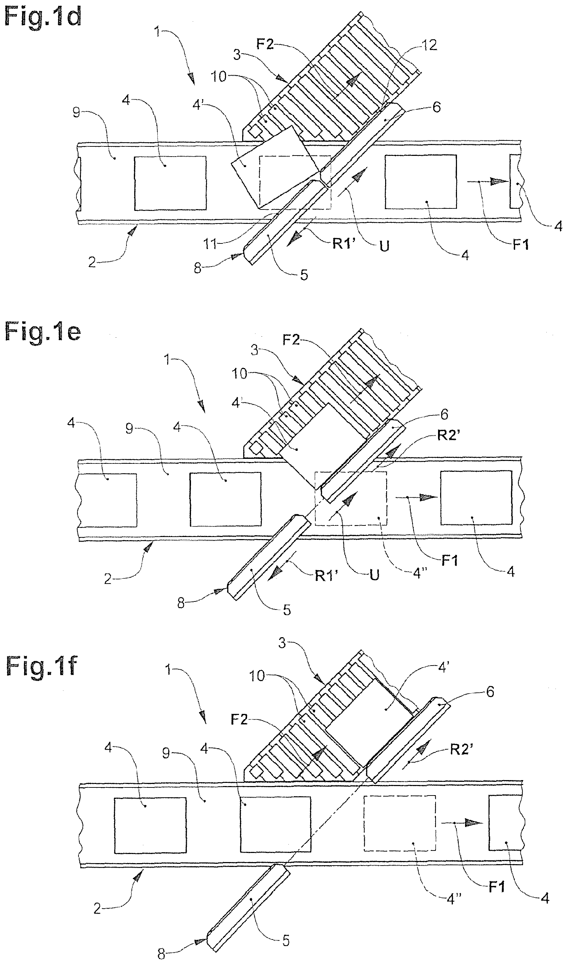

Die Ausführungsbeispiele von Förderanlagen 1, 21, 41, 61, 81, 101 gemäss den Figuren 1, 2, 3, 4, 5 und 6 weisen jeweils eine erste Fördervorrichtung 2, 22, 42, 62, 82, 102 in Ausführung eines Bandförderers auf. Der Bandförderer 2, 22, 42, 62, 82, 102 bildet quasi einen Hauptförderer aus, mittels welchem die Stückgüter 4 als Förderstrom entlang einer gemeinsamen Förderbahn in einer ersten Förderrichtung F1 gefördert werden. Die Stückgüter 4 sind dabei in Förderrichtung F1 betrachtet hintereinander und in Abstand zueinander angeordnet. Der Bandförderer 2, 22, 42, 62, 82, 102 umfasst als Förderorgan ein Förderband 9, 29, 49, 69, 89, 109, welches eine Förderfläche für die Stückgüter 4 ausbildet, welcher diese aufliegen.

Die Förderanlage 1, 21, 41, 61, 81, 101 enthält im Weiteren eine Ablenkvorrichtung 8, 28, 48, 68, 88, 108. Die Ablenkvorrichtung 8, 28, 48, 68, 88, 108 enthält ein, in seiner Ausgangsposition auf einer in Förderrichtung F1 betrachtet ersten Seite des Bandförderers 2, 22, 42, 62, 82, 102 angeordnetes erstes Ablenkorgan 5, 25, 45, 65, 85, 105.

Auf der entsprechend gegenüber liegenden zweiten Seite des Bandförderers 2, 22, 42, 62, 82, 102 ist eine Übernahmevorrichtung 3, 23, 43, 63, 83, 103 sowie ein mit der Übernahmevorrichtung 3, 23, 43, 63, 83, 103 kooperierendes zweites Ablenkorgan 6, 26, 46, 66, 86, 106 der Ablenkvorrichtung 8, 28, 48, 68, 88, 108 angeordnet. Die beiden Ablenkorgane 5, 25, 45, 65, 85, 105; 6, 26, 46, 66, 86, 106 bilden wenigstens ein Leitelement mit jeweils einer Leitfläche 11, 12; 31, 32; 51, 52; 71, 72; 91, 92; 111, 112 aus.

Die Übernahmevorrichtung 3, 23, 43, 63, 83, 103 ist als Rollenförderer ausgebildet, welcher die abgelenkten Stückgüter 4' in einer zweiten Förderrichtung F2 weiterfördert. Das Förderorgan des Rollenförderers wird aus einer Vielzahl von in der zweiten Förderrichtung F2 hintereinander angeordneten Rollen 10, 30, 50, 70, 90, 110 ausgebildet. Die Rollen 10, 30, 50, 70, 90, 110 können direkt oder indirekt angetrieben sein.

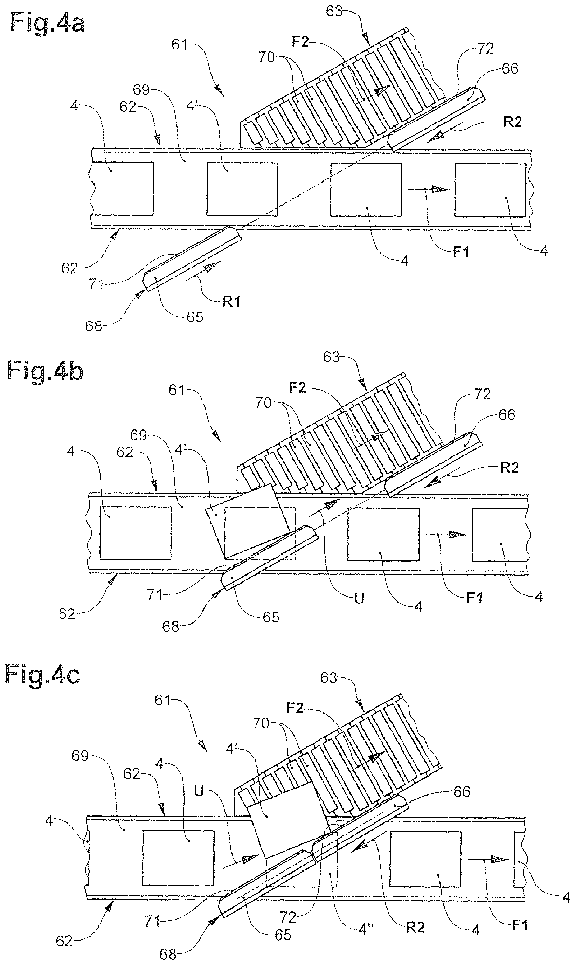

Gemäss den Ausführungsbeispielen nach Figur 1, 2, 4 und 6 führt der Rollenförderer 3, 23, 63, 103 die abgelenkten Stückgüter 4' in einem Winkel vom Bandförderers 2, 22, 62, 102 weg. D.h. die zweite Förderrichtung F2 schliesst mit der ersten Förderrichtung F1 einen Winkel ein. Dieser Winkel beträgt gemäss dem Ausführungsbeispiel nach Figur 1, 2 und 6 rund 45° und gemäss dem Ausführungsbeispiel nach Figur 4 rund 30°.

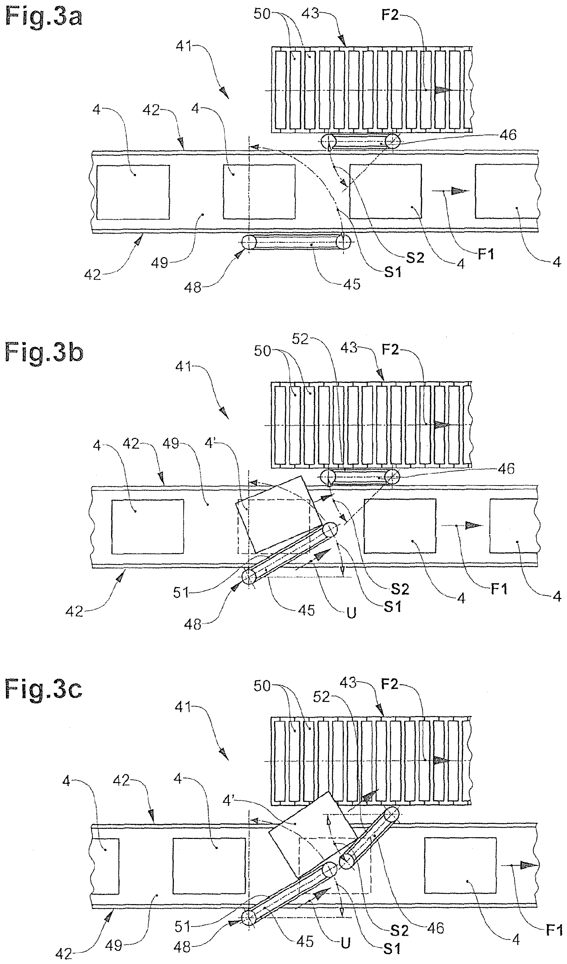

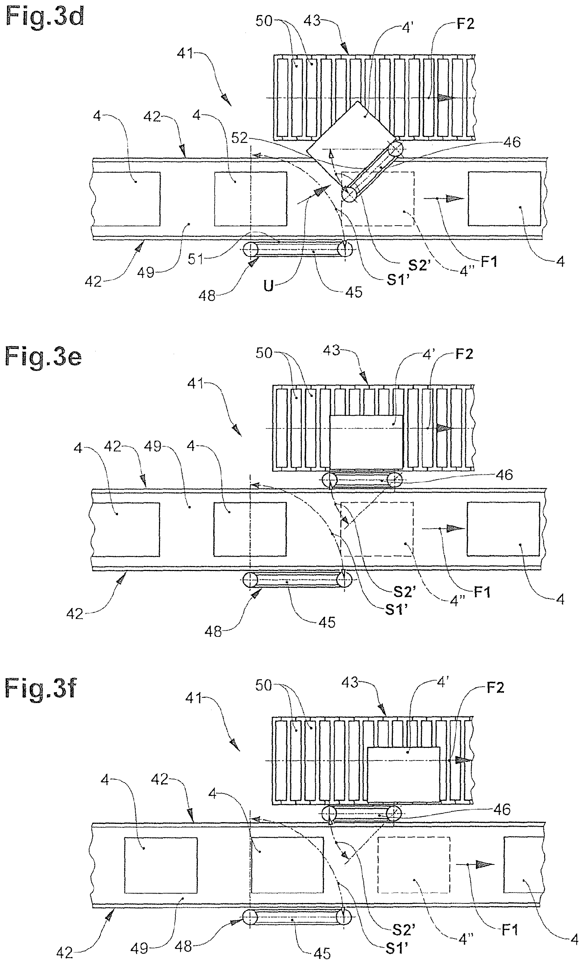

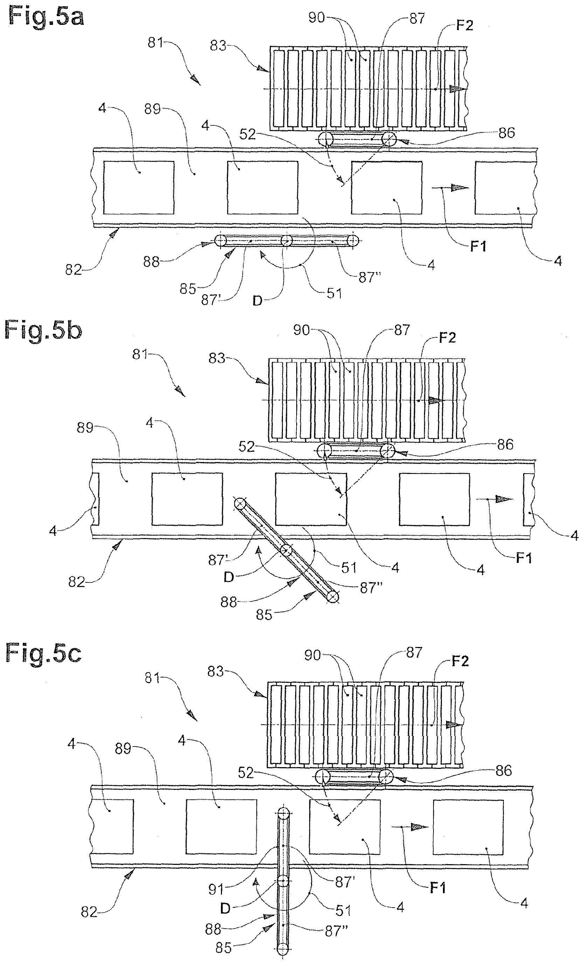

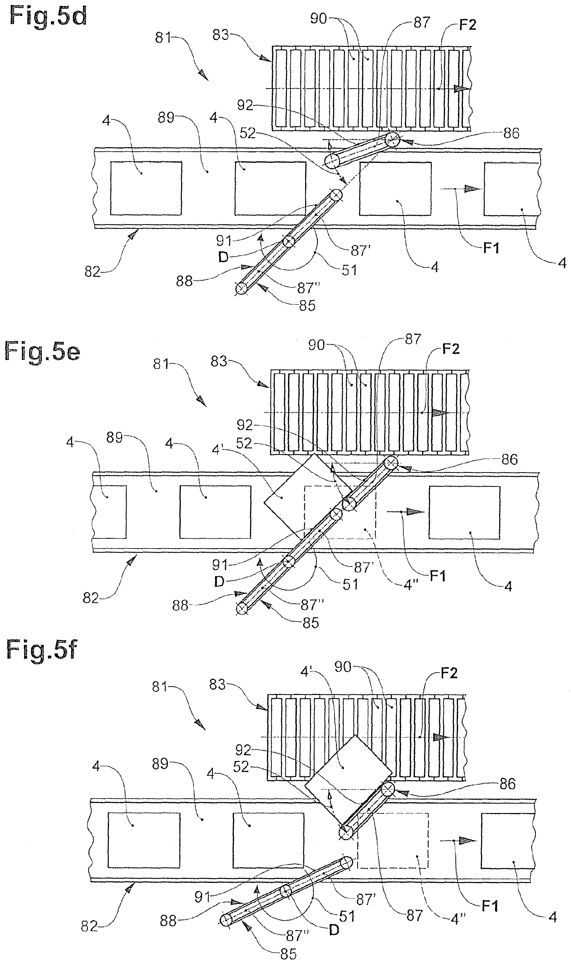

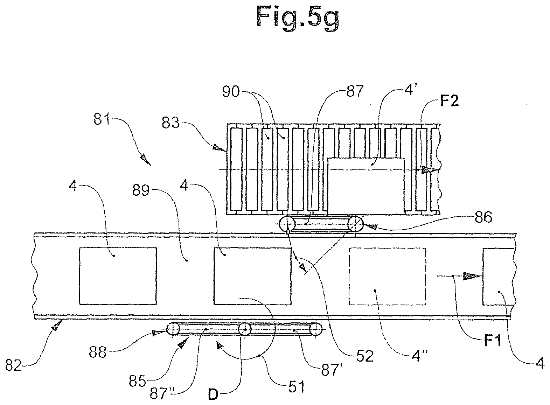

Gemäss den Ausführungsbeispielen nach Figur 3 und 5 führt der Rollenförderer 43, 83 die abgelenkten Stückgüter 4' parallel zum Bandförderers 42, 82 weg. D.h. die zweite Förderrichtung F2 verläuft parallel zur der ersten Förderrichtung F1.

Die Ablenkvorrichtung 8 gemäss dem Ausführungsbeispiel nach Figur 1 umfasst ein erstes und ein diesem schräg gegenüber liegend angeordnetes zweites Schieberelement 5, 6, welche in einer linearen Bewegung über eine Schienenführung in einem Winkel von rund 45° gegenüber der Förderrichtung F1 des Bandförderers 2 in die Förderbahn der in einem Förderstrom geförderten Stückgüter 4 bewegt werden können. Die Ausrichtung der Schieberelemente 5, 6 bzw. deren Leitflächen verlaufen sowohl in der Ausgangs- als auch in der Ablenkposition parallel zur Förderrichtung F2 des Rollenförderers 3. Entsprechend verläuft auch die Ablenkrichtung U parallel zur Förderrichtung F2 des Rollenförderers 3.

Zu Beginn eines Ablenkvorganges befinden sich beide Schieberelemente 5, 6 in ihrer Ausgangsposition ausserhalb der Förderbahn der Stückgüter (siehe Figur 1a). Zur Ablenkung eines einzelnen Stückgutes 4' vom Bandförderer 2 auf den Rollenförderer 3 wird in einer ersten Phase das erste Schieberelement 5 in Richtung des zweiten Schieberelementes 6 von der Seite bis zu seiner Ablenkposition in die Förderbahn des Förderstromes bewegt. Diese Richtung ist in der Figur 1 mit R1 gekennzeichnet. Das zweite Schieberelement 6 verharrt in dieser Phase noch in seiner Ausgangsposition (siehe Figur 1a).

Das erste Schieberelement 5 ragt in seiner Ablenkposition jedoch lediglich über einen Teilbereich der Förderbahn des Förderbandes 9. Dies genügt jedoch bereits um das ausgehend vom ersten Schieberelement 5 stromaufwärts nächst folgende Stückgut 4' in Ablenkrichtung U, d.h. in Richtung des Rollenförderers 3 abzulenken. Das abzulenkende Stückgut 4' wird auf dem Förderband 9 gegen das sich schräg zur Förderrichtung F1 in die Förderbahn erstreckende erste Schieberelement 5 gefördert. Das erste Schieberelement 5 bildet für das abzulenkende Stückgut 4' ein Barriere. Das abzulenkende Stückgut 4' wird hierdurch entlang der Leitfläche 11 in Richtung Rollenförderer 3 abgelenkt.

In einer zweiten Phase wird nun das zweite Schieberelement 6 von der Gegenseite in die Förderbahn der Stückgüter 4 in Gegenrichtung R2 zum ersten Schieberelement 5 hin bewegt (siehe Figur 1b und 1c). Das zweite Schieberelement 6 wird ebenfalls lediglich über einen Teilbereich der Förderbahn des Förderbandes 9 bewegt.

Bei Erreichen ihrer Ablenkposition bilden das zweite und erste Schieberelement 5, 6 zeitlich befristet eine gemeinsame Barriere mit einer kombinierten Leitfläche 11, 12 aus. In dieser Phase wird das vom ersten Schieberelement 5 abgelenkte Stückgut 4' zum zweiten Schieberelement 6 hin gelenkt und durch dessen Leitfläche 12 weiter in Richtung Rollenförderer 3 gelenkt.

Sobald das abgelenkte Stückgut 4' durch die Leitfläche 12 des zweiten Schieberelementes 6 geführt wird, wird das erste Schieberelement 5 in die Gegenrichtung R1' aus seiner Ablenkposition wieder in die Ausgangsposition zurück bewegt und aus der Förderbahn der Stückgüter 4 zurück bewegt (siehe Figur 1d und 1e).

Dadurch wird für das, dem abgelenkten Stückgut 4' unmittelbar nachfolgende Stückgut 4, welches beispielsweise nicht abgelenkt werden soll, der Förderweg durch den Ablenkbereich wenigstens teilweise wieder freigegeben. Das gegenüber dem zweiten Schieberelement 6 zeitlich vorgezogene Zurückbewegen des ersten Schieberelementes 5 ist wichtig, da das erste Schieberelement 5 gegenüber dem zweiten Schieberelement 6 weiter stromaufwärts angeordnet ist und daher früher mit dem, dem abgelenkten Stückgut 4' unmittelbar nachfolgenden Stückgut 4 in Interaktion gerät als das zweite Schieberelement 6.

In einer letzten Phase wird das zweite Schieberelement 6 gegenüber dem ersten Schieberelement 5 zeitlich versetzt ebenfalls wieder aus der Förderbahn der Stückgüter 4 zurück bewegt und von seiner Ablenkposition in die Ausgangsposition zurück bewegt. Die Bewegungsrichtung R2' des zweiten Schieberelementes 6 beim Zurückbewegen ist gleichgerichtet mit der Förderrichtung F2 des Rollenförderers 3. Das zweite Schieberelement 6 führt also das abgelenkte Stückgut 4' während des Zurückbewegens in seine Ausgangsposition auf den Rollenförderer 3.

Das zweite Schieberelement 6 ist beim Bewegen aus seiner Ausgangsposition in die Ablenkposition und beim Zurückbewegen von der Ablenkposition in die Ausgangsposition seitlich vom Rollenförderer 3 und parallel zu dessen Förderrichtung F2 angeordnet.

Nach Abschluss des Ablenkvorganges befinden sich beide Schieberelemente 5, 6 wieder in ihrer Ausgangsposition ausserhalb der Förderbahn der Stückgüter 4 (siehe Figur 1f). Der Förderweg bzw. die Förderbahn ist dann wieder vollständig freigegeben, so dass die dem abgelenkten Stückgut 4' stromaufwärts nachfolgenden Stückgüter den Ablenkbereich ungestört passieren können. Im Förderstrom der Stückgüter 4 befindet sich nun eine Lücke 4", welche dem ursprünglichen Förderplatz des abgelenkten Stückgutes 4' entspricht.

Das Ausführungsbeispiel nach Figur 4 entspricht grundsätzlich dem Ausführungsbeispiel nach Figur 1, jedoch mit dem Unterschied dass die Schieberelemente 65, 66 in einem Winkel von rund 30° gegenüber der Förderrichtung F1 des Bandförderers 62 angeordnet sind.

Entsprechend sind die Förderrichtung F2 des Rollenförderers 63 sowie die Bewegungsrichtungen R1, R1'; R2, R2' der Schieberelemente 65, 66 ebenfalls in einem Winkel von rund 30° zur Förderrichtung F1 des Bandförderers 62 angeordnet (im Gegensatz zu den rund 45° gemäss dem Ausführungsbeispiel nach Figur 1).

Der Ablauf des Ablenkvorganges und insbesondere der Bewegungsablauf der Schieberelemente 65, 66 entspricht jedoch jenem gemäss Figur 1. Die Figuren 4a bis 4c entsprechend daher dem Verfahrensablauf gemäss den Figuren 1a bis 1c. Die Verfahrensschritte gemässe den Figuren 1d bis 1f treffen auch auf das Ausführungsbeispiel gemäss Figur 4 zu. Es wird daher diesbezüglich auf die Figurenbeschreibung zu den Figuren 1a bis 1f verwiesen.

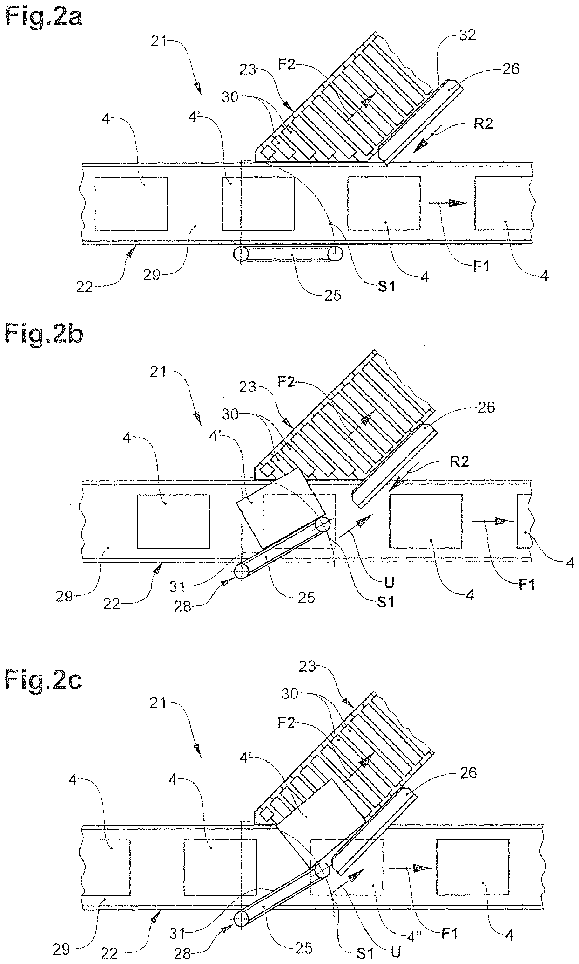

Das Ausführungsbeispiel gemäss Figur 2 unterscheidet sich vom Ausführungsbeispiel nach Figur 1 dadurch, dass das erste Ablenkorgan 25 als Schwenkorgan ausgebildet ist, welches von seiner Ausgangsposition in die Förderbahn der Stückgüter 4 in eine Ablenkposition einschwenkbar ist.

Das zweite Ablenkorgan 26 ist hingegen als Schieberelement ausgebildet und wird analog zum Schieberelement 6 gemäss dem Ausführungsbeispiel nach Figur 1 betrieben.

Nachfolgend werden daher lediglich jene Abläufe beschrieben, in welchen sich das Ausführungsbeispiel gemäss Figur 2 vom Ausführungsbeispiel gemäss Figur 1 unterscheidet. Betreffend weitergehenden Ausführungen wird auf die Figurenbeschreibung zum Ausführungsbeispiel nach Figur 1 verwiesen.

Zu Beginn eines Ablenkvorganges befinden sich das Schwenkelement 25 und das Schieberelement 26 in ihrer Ausgangsposition ausserhalb der Förderbahn der Stückgüter (siehe Figur 2a). Zur Ablenkung eines einzelnen Stückgutes 4' vom Bandförderer 22 auf den Rollenförderer 23 wird in einer ersten Phase das Schwenkelement 25 in Schwenkrichtung S1 in die Förderbahn des Förderstromes bis in seine Ablenkposition geschwenkt.

Das schräg gegenüber liegende Schieberelement 26 wird zeitlich versetzt zur Bewegung des Schwenkelements 25 in Richtung R2 von der gegenüber liegenden Seite her in die Förderbahn zum Schwenkelement 25 hin bewegt (siehe Figur 2b und 2c).

Das Schwenkelement 25 ragt in seiner Ablenkposition lediglich über einen Teilbereich der Förderfläche des Förderbandes 29. Dies genügt jedoch bereits um das, ausgehend vom Schwenkelement 25 stromaufwärts nächst folgende, durch einen Förderabstand getrennte Stückgut 4' in Ablenkrichtung U, d.h. in Richtung des Rollenförderers 23 abzulenken. Das Schieberelement 26 wird ebenfalls lediglich über einen Teilbereich der Förderfläche des Förderbandes 29 bewegt.

Das abzulenkende Stückgut 4' wird auf dem Förderband 29 gegen das sich schräg zur Förderrichtung F1 in die Förderbahn erstreckende Schwenkelement 25 gefördert. Das Schwenkelement 25 bildet für das abzulenkende Stückgut 4' ein Barriere. Das abzulenkende Stückgut 4' wird hierdurch entlang der Leitfläche 31 in Richtung Rollenförderer 23 abgelenkt.

Bei Erreichen ihrer Ablenkpositionen bilden das Schwenkelement 25 und das Schieberelement 26 zeitlich befristet eine gemeinsame Barriere mit einer kombinierten Leitfläche 31, 32 aus. In dieser Phase wird das vom Schwenkelement 25 abgelenkte Stückgut 4' zum Schieberelement 26 hin gelenkt und durch dessen Leitfläche 32 weiter in Richtung Rollenförderer 23 gelenkt (siehe Figur 2c).

Sobald das abgelenkte Stückgut 4' durch die Leitfläche 12 des Schieberelementes 26 geführt wird, wird das Schwenkelement 25 in die Gegenrichtung aus seiner Ablenkposition wieder in die Ausgangsposition zurückgeschwenkt (nicht gezeigt).

Das Schieberelement 26 wird gegenüber dem Schwenkelement 25 zeitlich versetzt ebenfalls wieder aus der Förderbahn von seiner Ablenkposition in die Ausgangsposition zurück bewegt. Der Bewegungsablauf verläuft analog zum Bewegungsablauf des zweiten Schieberelementes 6 gemäss dem Ausführungsbeispiel nach Figur 1.

Das Ausführungsbeispiel gemäss Figur 3 unterscheidet sich vom Ausführungsbeispiel nach Figur 2 dadurch, dass das zweite Ablenkorgan 46 ebenfalls als Schwenkorgan ausgebildet ist, welches von seiner Ausgangsposition in die Förderbahn der Stückgüter 4 in eine Ablenkposition schwenkbar ist.

Zu Beginn eines Ablenkvorganges befinden sich beide Schwenkelemente 25, 26 in ihren Ausgangspositionen ausserhalb der Förderbahn der Stückgüter 4 (siehe Figur 3a). Zur Ablenkung eines einzelnen Stückgutes 4' vom Bandförderer 42 auf den Rollenförderer 43 wird in einer ersten Phase das erste Schwenkelement 45 in Schwenkrichtung S1 in die Förderbahn des Förderstromes in seine Ablenkposition geschwenkt. Das zweite Schwenkelement 46 verharrt in dieser Phase noch in seiner Ausgangsposition (siehe Figur 3b).

Das erste Schwenkelement 45 ragt in seiner Ablenkposition jedoch lediglich über einen Teilbereich der Förderbahn des Förderbandes 49. Dies genügt jedoch bereits um das, ausgehend vom ersten Schwenkelement 45 stromaufwärts nächst folgende Stückgut 4' in Ablenkrichtung U, d.h. in Richtung des Rollenförderers 43 abzulenken. Das abzulenkende Stückgut 4' wird auf dem Förderband 49 gegen das sich schräg zur Förderrichtung F1 in die Förderbahn erstreckende erste Schieberelement 45 gefördert. Das erste Schieberelement 45 bildet für das abzulenkende Stückgut 4' ein Barriere. Das abzulenkende Stückgut 4' wird hierdurch entlang der Leitfläche 51 in Richtung Rollenförderer 43 abgelenkt.

In einer zweiten Phase wird nun das zweite Schwenkelement 46 in Schwenkrichtung S2 von der Gegenseite in die Förderbahn der Stückgüter 4 zum ersten Schwenkelement 45 hin geschwenkt (siehe Figur 3c). Der Drehsinn S1, S2 der beiden Schwenkelemente 45, 46 ist gleichgerichtet. Das zweite Schwenkelement 46 wird ebenfalls lediglich über einen Teilbereich der Förderfläche des Förderbandes 49 geschwenkt. Die beiden Schwenkelemente 45, 46 bewegen sich in der kombinierten Bewegung aufeinander zu.

Bei Erreichen ihrer Ablenkpositionen bilden das erste und zweite Schwenkelement 45, 46 zeitlich befristet eine gemeinsame Barriere mit einer kombinierten Leitfläche 51, 52 aus. In dieser Phase wird das vom ersten Schwenkelement 45 abgelenkte Stückgut 4' zum zweiten Schwenkelement 46 hin gelenkt und durch dessen Leitfläche 52 weiter in Richtung Rollenförderer 43 gelenkt bzw. geführt (siehe Figur 3c).

Sobald das abgelenkte Stückgut 4' durch die Leitfläche 52 des zweiten Schwenkelementes 46 geführt wird, wird das erste Schwenkelement 45 in die Gegenrichtung S1' aus seiner Ablenkposition wieder in die Ausgangsposition zurückgeschwenkt (siehe Figur 3d).

Dadurch wird für das, dem abgelenkten Stückgut 4' unmittelbar nachfolgende Stückgut 4, welches beispielsweise nicht abgelenkt werden soll, der Förderweg durch den Ablenkbereich wenigstens teilweise wieder freigegeben. Das gegenüber dem zweiten Schwenkelement 46 zeitlich vorgezogene Zurückbewegen des ersten Schwenkelementes 45 ist auch hier wichtig, da das erste Schwenkelement 45 gegenüber dem zweiten Schwenkelement 46 weiter stromaufwärts angeordnet ist und daher früher mit dem, dem abgelenkten Stückgut 4' unmittelbar nachfolgenden Stückgut 4 in Interaktion gerät als das zweite Schwenkelement 46.

In einer letzten Phase wird das zweite Schwenkelement 46 gegenüber dem ersten Schwenkelement 45 zeitlich versetzt ebenfalls wieder aus der Förderbahn der Stückgüter 4 von seiner Ablenkposition in die Ausgangsposition zurückgeschwenkt.

Das zweite Schwenkelement 46 ist in seiner Ausgangsposition parallel zur Förderrichtung F2 des Rollenförderers 3 ausgerichtet und neben diesem angeordnet. Dadurch wird das abgelenkte Stückgut 4' durch das zweite Schwenkelement 46 während des Zurückschwenkens in seine Ausgangsposition in die Förderrichtung F2 des Rollenförderer 43 eingeschwenkt (siehe Figur 3e).

Nach Abschluss des Ablenkvorganges befinden sich beide Schwenkelemente 45, 46 wieder in ihrer Ausgangsposition ausserhalb der Förderbahn der Stückgüter 4 (siehe Figur 3f). Der Förderweg bzw. die Förderbahn ist dann wieder vollständig freigegeben, so dass die dem abgelenkten Stückgut 4' stromaufwärts nachfolgenden Stückgüter den Ablenkbereich ungestört passieren können. Im Förderstrom der Stückgüter 4 befindet sich nun eine Lücke 4", welche dem ursprünglichen Förderplatz des abgelenkten Stückgutes 4' entspricht.

Die Ablenkvorrichtung 88 gemäss dem Ausführungsbeispiel nach Figur 5 umfasst ein erstes Ablenkorgan 85, welches als Drehelement ausgebildet ist. Dieses Drehelement 85 ist um eine seitlich ausserhalb der Förderbahn bzw. des Förderbandes 89 angeordnete Drehachse D drehbar gelagert. Das Drehelement 85 ist ein längliches Element, welches auf beiden Seiten der Drehachse D ein Leitelement 87', 87" mit jeweils einer Leitfläche 91 zum Ablenken der Stückgüter 4' ausbildet.

Zu Beginn eines Ablenkvorganges befinden sich das Drehelement 85 und das Schwenkelement 86 in ihren Ausgangspositionen ausserhalb der Förderbahn der Stückgüter 4 (siehe Figur 5a).

Durch Drehen des Drehelementes 85 in Drehrichtung S1 wird das Leitelemente 87' in den Förderabstand zwischen zwei Stückgüter 4 hinein bewegt und gemeinsam mit dem Förderabstand zum Ablenkbereich hin bewegt bis das Leitelement 87' seine Ablenkposition im Ablenkbereich erreicht hat. Das Schwenkelement 86 verharrt in dieser Phase noch in seiner Ausgangsposition (siehe Figur 5b, 5c).

Das Leitelement 87' verweilt zur Ablenkung des Stückgutes 4' zeitlich befristet in seiner Ablenkposition. Das stromaufwärts nächst folgende Stückgut 4' wird durch das Leitelement 87' entlang der Leitfläche 91 in Richtung des Rollenförderers 83 abgelenkt. Das Leitelement 87' ragt in seiner Ablenkposition lediglich über einen Teilbereich der Förderbahn.

Das Schwenkelement 86 wird zeitlich versetzt in Schwenkrichtung S2 von der Gegenseite in die Förderbahn der Stückgüter 4 zum Leitelement 87' hin geschwenkt (siehe Figur 5d). Das Schwenkelement 86 wird ebenfalls lediglich über einen Teilbereich der Förderfläche geschwenkt. Die beiden Ablenkorgane 85, 86 bewegen sich in der kombinierten Bewegung aufeinander zu.

Bei Erreichen ihrer Ablenkpositionen bilden die Ablenkorgane 85, 86 eine gemeinsame Barriere mit einer kombinierten Leitfläche 91, 92 aus. In dieser Phase wird das vom Drehelement 85 abgelenkte Stückgut 4' zum Schwenkelement 86 hin gelenkt und durch dessen Leitfläche 92 weiter in Richtung Rollenförderer 93 gelenkt bzw. geführt (siehe Figur 5e).

Sobald das abgelenkte Stückgut 4' durch die Leitfläche 92 des Schwenkelementes 86 geführt wird, wird das erste Schwenkelemente 85 in derselben Drehrichtung S1 weitergedreht, wobei das Leitelement 87' wieder aus der Förderbahn heraus bewegt wird (siehe Figur 5f, 5g).

Dadurch wird für das, dem abgelenkten Stückgut 4' unmittelbar nachfolgende Stückgut 4 der Förderweg durch den Ablenkbereich wenigstens teilweise freigegeben.

In einer letzten Phase wird das Schwenkelement 86 gegenüber dem Drehelement 85 zeitlich versetzt ebenfalls wieder aus der Förderbahn in die Ausgangsposition zurückgeschwenkt.

Das Schwenkelement 86 ist in seiner Ausgangsposition parallel zur Förderrichtung F2 des Rollenförderers 83 ausgerichtet und neben diesem angeordnet. Dadurch wird das abgelenkte Stückgut 4' durch das zweite Schwenkelement 86 während des Zurückschwenkens in seine Ausgangsposition in die Förderrichtung F2 des Rollenförderer 83 eingeschwenkt (siehe Figur 5f, 5g).

Nach Abschluss des Ablenkvorganges befinden sich beide Ablenkorgane 85, 86 wieder in ihrer Ausgangsposition ausserhalb der Förderbahn der Stückgüter 4 (siehe Figur 5g). Der Förderweg bzw. die Förderbahn ist dann wieder vollständig freigegeben, so dass die dem abgelenkten Stückgut 4' stromaufwärts nachfolgenden Stückgüter 4 den Ablenkbereich ungestört passieren können. Im Förderstrom der Stückgüter 4 befindet sich nun eine Förderlücke 4".

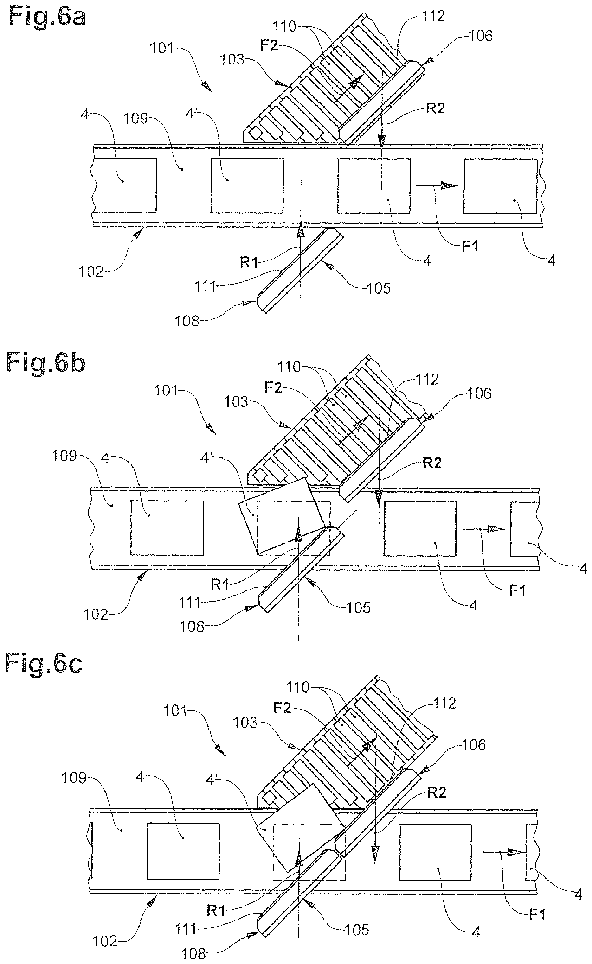

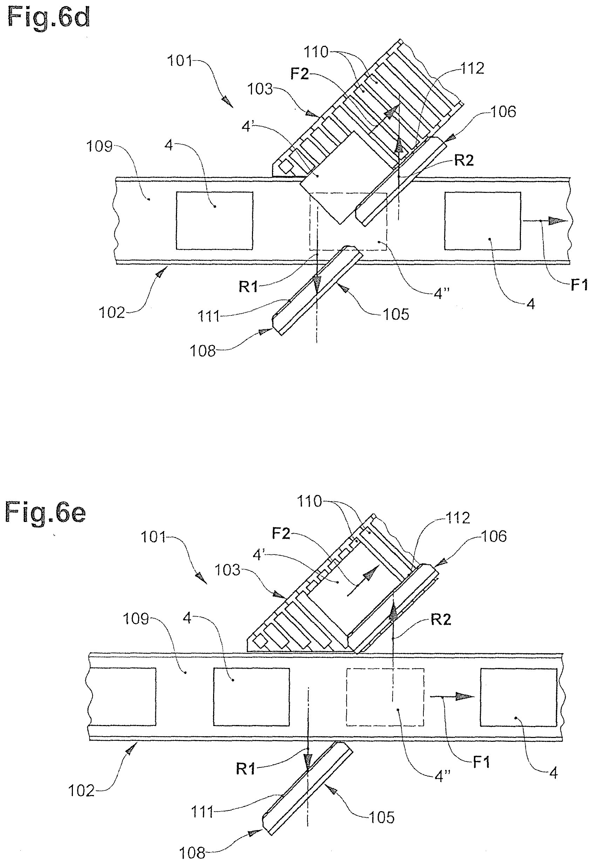

Die Ablenkvorrichtung 108 gemäss dem erfindungsgemässen Ausführungsbeispiel nach Figur 6 weist einen vergleichbaren Aufbau und eine vergleichbare Anordnung sowie eine vergleichbare Betriebsweise auf wie im Ausführungsbeispiel nach Figur 1.

Auch hier sind jeweils auf einer Seite des Förderbandes 109 ein erstes und ein diesem schräg gegenüber liegendes zweites Schieberelement 105, 106 in einem Winkel von rund 45° schräg zur ersten Förderrichtung F1 angeordnet.

Im Gegensatz zum Ausführungsbeispiel nach Figur 1 werden die Schieberelemente 105, 106 jedoch senkrecht zur ersten Förderrichtung F1 in die Förderbahn der Fördervorrichtung 102 translatorisch bewegt.

Zu Beginn eines Ablenkvorganges befinden sich beide Schieberelemente 105, 106 in ihrer Ausgangsposition ausserhalb der Förderbahn (siehe Figur 1a). Zur Ablenkung eines einzelnen Stückgutes 4' wird in einer ersten Phase das erste Schieberelement 105 in Richtung des zweiten Schieberelementes 106 in einen Teilbereich der Förderbahn bewegt. Diese Richtung ist in der Figur 1 mit R1 gekennzeichnet. Das zweite Schieberelement 6 verharrt in dieser Phase noch in seiner Ausgangsposition (siehe Figur 1a).

Das erste Schieberelement 105 lenkt nun jedoch trotzdem das stromaufwärts nächst folgende Stückgut 4' entlang seiner Leitfläche 111 in Richtung des Rollenförderers 103 ab.

In einer zweiten Phase wird das zweite Schieberelement 106 von der Gegenseite in einen Teilbereich der Förderbahn in eine Gegenrichtung R2 zum ersten Schieberelement 105 hin bewegt (siehe Figur 1b und 1c).

Bei Erreichen ihrer Ablenkpositionen bilden das erste und zweite Schieberelement 105, 106 eine gemeinsame Barriere mit einer kombinierten Leitfläche 111, 112 aus. In dieser Phase wird das vom ersten Schieberelement 105 abgelenkte Stückgut 4' zum zweiten Schieberelement 106 hin gelenkt und durch dessen Leitfläche 112 weiter in Richtung Rollenförderer 103 gelenkt.

Sobald das abgelenkte Stückgut 4' durch die Leitfläche 112 des zweiten Schieberelementes 106 geführt wird, wird das erste Schieberelement 105 in die Gegenrichtung R1' wieder in die Ausgangsposition und aus der Förderbahn zurück bewegt (siehe Figur 6c und 6d).

Dadurch wird für das, dem abgelenkten Stückgut 4' unmittelbar nachfolgende Stückgut 4 der Förderweg durch den Ablenkbereich hindurch wenigstens teilweise wieder freigegeben.

In einer letzten Phase wird das zweite Schieberelement 106 gegenüber dem ersten Schieberelement 105 zeitlich versetzt ebenfalls wieder in der Gegenrichtung R2' aus der Förderbahn in die Ausgangsposition zurück bewegt. Das zweite Schieberelement 106 führt dabei das abgelenkte Stückgut 4' während des Zurückbewegens in seine Ausgangsposition auf den Rollenförderer 103. Das zweite Schieberelement 106 ist seitlich vom Rollenförderer 103 und parallel zu dessen Förderrichtung F2 angeordnet.

Nach Abschluss des Ablenkvorganges befinden sich beide Schieberelemente 105, 106 wieder in ihrer Ausgangsposition (siehe Figur 6e). Der Förderweg bzw. die Förderbahn ist wieder vollständig freigegeben, so dass die dem abgelenkten Stückgut 4' stromaufwärts nachfolgenden Stückgüter 4 den Ablenkbereich ungestört passieren können. Im Förderstrom der Stückgüter 4 befindet sich nun eine Förderlücke 4".

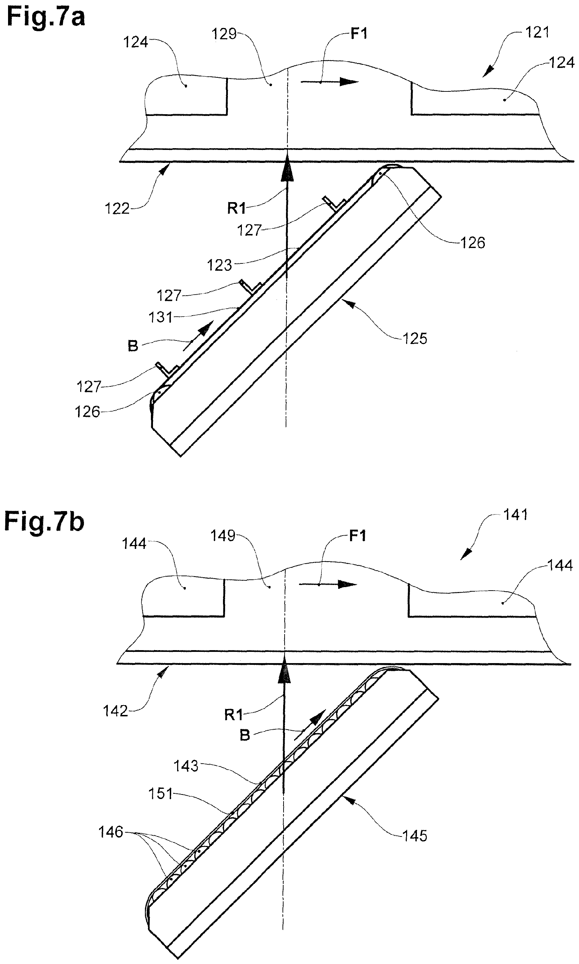

Die Figuren 7a bis 7d zeigen einen Ausschnitt einer erfindungsgemässen Förderanlage 121, 141, 161, 181. Diese enthält jeweils eine erste Fördervorrichtung 122, 142, 162, 182 in Ausführung eines Bandförderers. Die Fördervorrichtung braucht jedoch nicht zwingend ein Bandförderer zu sein. Auf dem Bandförderer 122, 142, 162, 182 werden die auszulenkenden Stückgüter 124, 144, 164, 184 in einer ersten Förderrichtung F1 gefördert. Die Stückgüter 124, 144, 164, 184 sind in Förderrichtung F1 betrachtet hintereinander und in Abstand zueinander angeordnet.

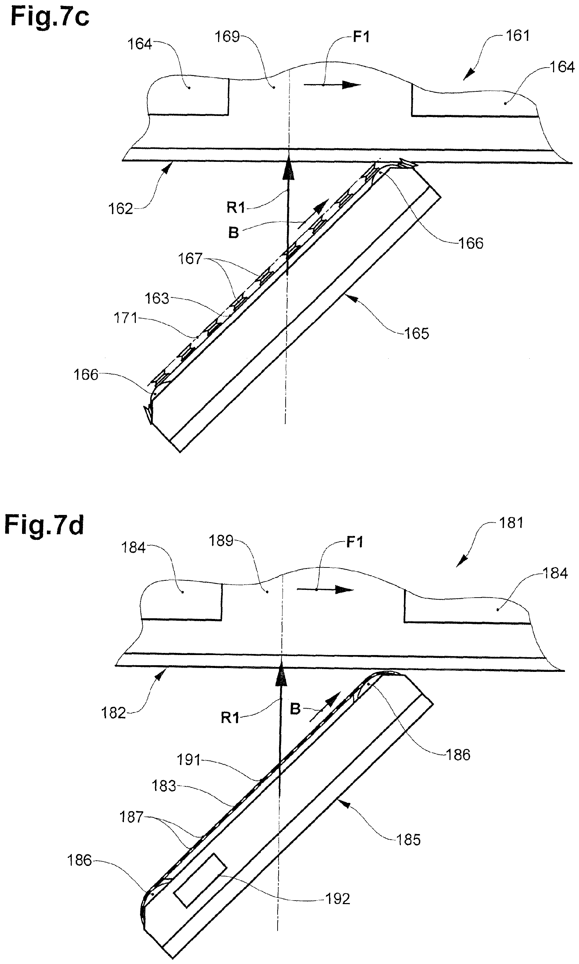

Die Förderanlage 121, 141, 161, 181 enthält im Weiteren eine Ablenkvorrichtung mit einem Ablenkorgan 125, 145, 165, 185. Das Ablenkorgan 125, 145, 165, 185 bildet ein armförmiges Leitelement mit jeweils einem Leitabschnitt 131, 151, 171, 191 aus. Der Leitabschnitt 131, 151, 191 ist insbesondere gemäss den Ausführungsbeispielen nach Figur 7a, 7b und 7d als Leitfläche ausgebildet.

Der Leitabschnitt 131, 151, 171, 191 des Ablenkorgans 125, 145, 165, 185 ist in Ablenkposition in einem Winkel zur Förderrichtung F1 ausgerichtet, so dass das Stückgut 124, 144, 164, 184 seitlich aus der Förderrichtung F1 ausgelenkt werden kann.

Das Ablenkorgan 125, 145, 165, 185 bildet, wie in den Ausführungsbeispielen nach Figur 1a-1f, 2a-2c, 3a-3f, 4a-4c, 5a-5g und 6a-6e ausführlich beschrieben, für das abzulenkenden Stückgut 124, 144, 164, 184 ein Barriere. Das abzulenkende Stückgut 124, 144, 164, 184 wird hierdurch entlang des Leitabschnittes 131, 151, 171, 191 zur Seite abgelenkt.

Zur Einnahme der Ablenkposition über dem Bandförderer 122, 142, 162, 182 kann das Ablenkorgan 125, 145, 165, 185, wie in den Figuren 7a-7d dargestellt, analog zum Ausführungsbeispiel nach Figur 6a-6e quer zur Förderrichtung F1 über den Bandförderer 122, 142, 162, 182 bewegt werden. Selbstverständlich kann das Ablenkorgan 125, 145, 165, 185 hierzu auch eine andersartige Bewegung gemäß den Ausführungsbeispielen nach den Figuren 1a-1f, 2a-2c, 3a-3f, 4a-4c oder 5a-5g ausführen.

Das Ablenkorgan gemäss den Figuren 7a bis 7d kann insbesondere als Schwenkorgan, Drehorgan oder Schieberorgan ausgebildet sein. Das Ablenkorgan kann daher insbesondere auch in den Ablenkvorrichtungen gemäss den Figuren 1a-1f, 2a-2c, 3a-3f, 4a-4c, 5a-5g oder 6a-6e Verwendung finden.

Das Leitelement des Ablenkorgans 125, 145, 165, 185 gemäss Figur 7a-7d enthält ein umlaufendes, flexibles Abweisband 123, 143, 163, 183. Das Abweisband 123, 143, 163, 183 kann direkt, z. B. motorisch, oder indirekt, durch die abzulenkenden Stückgüter 124, 144, 164, 184 angetrieben sein.

Das Ablenkorgan 125, 145, 165, 185 enthält ferner Umlenkrollen 126, 146, 166, 186, um welche das umlaufende Abweisband 123, 143, 163, 183 umgelenkt wird.

Das Abweisband 123, 143, 163, 183 wird in der Bewegungsrichtung B bewegt. Die Bewegungsrichtung B des Abweisbandes 123, 143, 163, 183 auf der Ablenkseite verläuft in Ablenkposition parallel zur Ablenkrichtung U (nicht dargestellt).

Gemäss dem Ausführungsbeispiel nach Figur 7a bildet das Abweisband 123 eine bewegte Leitfläche 131 aus. Auf der Leitfläche 131 sind Mitnehmer 127 angeordnet, welche an den Stückgütern 124 in Anschlag kommen und diese in Ablenkrichtung zusätzlich stossen. Die Mitnehmer 127 finden insbesondere bei einem direkt angetriebenen Abweiswand 123 Anwendung.

Gemäss dem Ausführungsbeispiel nach Figur 7b bildet das Abweisband 143 ebenfalls eine bewegte Leitfläche 151 aus. Das Abweisband 143 wird zur Ablenkseite hin durch eine Vielzahl von nebeneinander angeordneten Rollen 146 abgestützt.

Gemäss dem Ausführungsbeispiels nach Figur 7c sind auf dem Abweisband 163 eine Vielzahl von Saugnäpfen 167 angeordnet, welche einen Leitabschnitt 171 ausbilden. Die Saugnäpfe 167 saugen sich an der Oberfläche der Stückgüter 164 fest. Das Abweisband 163 ist dadurch in der Lage, die Stückgüter 164 in Ablenkrichtung U mittels den Saugnäpfen 167 mitzuziehen. Die Saugnäpfe 167 finden insbesondere bei einem direkt angetriebenen Abweiswand 163 Anwendung.

Gemäss dem Ausführungsbeispiel nach Figur 7d weist das Abweisband 183 Luftdurchtrittsöffnungen 187 auf, z. B. in Form einer Perforation. Ferner enthält die Auslenkvorrichtung eine Unterdruckeinrichtung 192, welche mit den Luftdurchtrittsöffnungen 187 zusammen wirken. Mittels der Unterdruckeinrichtung 192 wird am Abweisband 183 ein Unterdruck angelegt. Das Stückgut 184 wird über die Luftdurchtrittsöffnungen 187 durch den angelegten Unterdruck an das Abweisband 183 angesaugt. Auf diese Weise ist das Abweisband 183 in der Lage das Stückgut 184 mitzuziehen. Das Anlegen eines Unterdruckes findet insbesondere bei einem direkt angetriebenen Abweiswand Anwendung.

## Patentansprüche

1. Verfahren zum Fördern von Stückgütern (4), wobei die Stückgüter (4) auf einer durch das Förderorgan (109) einer Fördervorrichtung (102) ausgebildeten Förderfläche entlang einer Förderbahn in einer ersten Förderrichtung (F1) gefördert werden und wenigstens einzelne Stückgüter (4') durch Leitelemente von zwei Ablenkorganen (105, 106) einer Ablenkvorrichtung (108) aus der ersten Förderrichtung (F1) abgelenkt und einer Übernahmevorrichtung (103) übergeben werden, wobei die Leitelemente mit der Förderrichtung (F1) in Ablenkposition der Ablenkorgane (105, 106) einen Winkel von 10° bis 80° ausbilden, und zum Ablenken eines Stückgutes (4') ein erstes Ablenkorgan (105) der Ablenkvorrichtung (108) aus einer Ausgangsposition von einer ersten Seite in die Förderbahn der Stückgüter (4) bewegt wird und das Stückgut (4') dadurch aus der ersten Förderrichtung (F1) abgelenkt wird, und ein mit dem ersten Ablenkorgan (105) kooperierendes zweites Ablenkorgan (106) der Ablenkvorrichtung (108) aus einer Ausgangsposition von einer gegenüber liegenden zweiten Seite in die Förderbahn der Stückgüter (4) bewegt wird und das vom ersten Ablenkorgan (105) abgelenkte Stückgut (4') zur Übernahmevorrichtung (103) lenkt, wobei das erste und zweite Ablenkorgan (106) Translationselemente sind, welche in einer Translationsbewegung in die Förderbahn der Stückgüter (4) bewegt werden,
**dadurch gekennzeichnet, dass**
die Richtung (R1, R2) der Translationsbewegung senkrecht zur Förderrichtung (F1) der Fördervorrichtung (102) erfolgt.

2. Verfahren gemäss Anspruch 1, **dadurch gekennzeichnet, dass** das erste Ablenkorgan (105) von einer ersten Seite in die Förderbahn der Stückgüter (4) bewegt wird und ein Stückgut (4') ablenkt, und das zweite Ablenkorgan (106) zeitlich versetzt von der gegenüber liegenden zweiten Seite in die Förderbahn der Stückgüter (4) bewegt wird und das abgelenkte Stückgut (4') zur Übernahmevorrichtung (103) hin lenkt.

3. Verfahren gemäss Anspruch 2, **dadurch gekennzeichnet, dass** das erste Ablenkorgan (105) wieder aus der Förderbahn der Stückgüter (4) in eine Ausgangsposition zurück bewegt wird während das zweite Ablenkorgan (106) das abgelenkte Stückgut (4') zur Übernahmevorrichtung (103) hin lenkt.

4. Verfahren gemäss Anspruch 2 oder 3, **dadurch gekennzeichnet, dass** das zweite Ablenkorgan (106) wieder aus der Förderbahn der Stückgüter (4) in eine Ausgangsposition zurück bewegt wird sobald das abgelenkte Stückgut (4') an die Übernahmevorrichtung (103) übergeben ist.

5. Förderanlage (101), insbesondere zur Durchführung des Verfahrens gemäss den Ansprüchen 1 bis 4, mit einer Fördervorrichtung (102) zum Fördern von Stückgütern (4) entlang einer Förderbahn in einer ersten Förderrichtung (F1), wobei die Fördervorrichtung (102) ein Förderorgan (109) enthält, welches eine Förderfläche für die Stückgüter (4) ausbildet, und mit einer Ablenkvorrichtung (108) zum Ablenken wenigstens einzelner, entlang der Förderbahn geförderter Stückgüter (4') aus der ersten Förderrichtung (F1), und die Ablenkvorrichtung (108) ein erstes und zweites Ablenkorgan (105; 106) mit wenigstens einem Leitelement enthält, wobei die Leitelemente mit der Förderrichtung (F1) in Ablenkposition der Ablenkorgane (105, 106) einen Winkel von 10° bis 80° ausbilden, und das erste Ablenkorgan (105) aus einer Ausgangsposition von einer ersten Seite in die Förderbahn der Stückgüter (4) bewegbar ist, um einzelne Stückgüter (4') aus der ersten Förderrichtung (F1) abzulenken, und das zweite Ablenkorgan (106) aus einer Ausgangsposition von einer gegenüber liegenden zweiten Seite in die Förderbahn der Stückgüter (4) bewegbar ist, um mit dem ersten Ablenkorgan (105) zu kooperieren, und um die vom ersten Ablenkorgan (105) abgelenkten Stückgüter (4') an eine Übernahmevorrichtung (103) weiterzuleiten, wobei das erste und zweite Ablenkorgan (5105; 106) als Translationselement ausgebildet ist, welche mittels einer Translationsbewegung in die Förderbahn der Stückgüter (4) bewegbar sind,
**dadurch gekennzeichnet, dass**
das erste und zweite Ablenkorgan (105; 106) in einer Richtung (R1, R2) senkrecht zur Förderrichtung (F1) der Fördervorrichtung (102) bewegbar sind.

6. Förderanlage gemäss Anspruch 5, **dadurch gekennzeichnet, dass** die Übernahmevorrichtung (103) seitlich von der Fördervorrichtung (102) angeordnet ist, und das zweite Ablenkorgan (106) auf der Seite der Übernahmevorrichtung (103) angeordnet ist.

7. Förderanlage gemäss Anspruch 5 oder 6, **dadurch gekennzeichnet, dass** das Leitelement des ersten und/oder zweiten Ablenkorgans (105,106) einen umlaufenden, flexiblen Abweiskörper (123, 143, 163, 183) enthält, welcher auf der Ablenkseite parallel zu einem Leitabschnitt (131, 151, 171. 191) in Ablenkrichtung bewegbar ist, wobei am Leitelement insbesondere Mittel (127, 167, 187, 192) zur Ausübung einer Mitnahmekraft auf das Stückgut (4) angeordnet sind.

## Claims

1. A method for conveying piece goods (4), wherein the piece goods (4) are conveyed along a conveying path in a first conveying direction (F1), on a conveying surface which is formed by the conveying element (109) of a conveying device (102), and at least individual piece goods (4') are deflected by guidance elements of two deflecting elements (105, 106) of a deflecting device (108), out of the first conveying direction (F1) and transferred to a take-over device (103), wherein the guidance elements in the deflection position of the deflecting elements (105, 106) form an angle of 10° to 80° with the conveying direction (F1), and a first deflecting element (105) of the deflecting device (108) is moved out of an initial position from a first side into the conveying path of the piece goods (4), for deflecting a piece good (4'), and the piece good (4') is deflected out of the first conveying direction (F1) on account of this, and a second deflecting element (106) of the deflecting device (108) which cooperates with the first deflecting element (105) is moved out of an initial position from an opposite second side into the conveying path of the piece goods (4), and the piece good (4') which is deflected by the first deflecting element (105) is guided to the take-over device (103), wherein the first and the second deflecting element (106) are translation elements which in a translation movement are moved into the conveying path of the piece goods (4),
**characterised in that**
the direction (R1, R2) of the translation movement is effected perpendicularly to the conveying direction (F1) of the conveying device (102).

2. A method according to claim 1, **characterised in that** the first deflecting element (105) is moved from a first side into the conveying path of the piece goods (4), and a piece good (4') is deflected, and the second deflecting element (106) is moved in a temporally staggered manner from the opposite second side into the conveying path of the piece goods (4) and guides the deflected piece good (4') to the take-over device (103).

3. A method according to claim 2, **characterised in that** the first deflecting element (105) is moved again out of the conveying path of the piece goods (4) back into an initial position, whilst the second deflecting element (106) guides the deflected piece good (4') towards the take-over device (103).

4. A method according to claim 2 or 3, **characterised in that** the second deflecting element (106) is moved back again out of the conveying path of the pieced goods (4) into an initial position as soon as the deflected piece good (4') is transferred onto the take-over device (103).

5. A conveying facility (101), in particular for carrying out the method according to the claims 1 to 4, with a conveying device (102) for conveying piece goods (4) along a conveying path in a first conveying direction (F1), wherein the conveying device (102) comprises a conveying element (109) which forms a conveying surface for the piece goods (4), and with a deflecting device (108) for deflecting at least individual piece goods (4') conveyed along the conveying path, out of the first conveying direction (F1), and the deflecting device (108) comprises a first and a second deflecting element (105; 106) with at least one guidance element, wherein the guidance elements in the deflection position of the deflecting elements (105, 106), form an angle of 10° to 80° with the conveying direction (F1), and the first deflecting element (105) is movable out of an initial position from a first side into the conveying path of the piece goods (4), so as to deflect individual piece goods (4') out of the first conveying direction (F1), and the second deflecting element (106) is movable out of an initial position from an opposite second side into the conveying path of the piece goods (4), so as to cooperate with the first deflecting element (105) and so as to lead the piece goods (4') deflected by the first deflecting element (105) further onto a take-over device (103), wherein the first and the second deflecting element (105; 106) are designed as a translation elements which are movable into the conveying path of the piece goods (4) by way of a translation movement,
**characterised in that**
the first and the second deflecting element (105; 106) are movable in a direction (R1, R2) perpendicular to the conveying direction (F1) of the conveying device (102).

6. A conveying facility according to claim 5, **characterised in that** the take-over device (103) is arranged laterally of the conveying device (102), and the second deflecting element (106) is arranged at the side with the take-over device (103).

7. A conveying facility according to claim 5 or 6, **characterised in that** the guidance element of the first and/or second deflecting element (105, 106) comprises a circulating, flexible deflector body (123, 143, 163, 183) which on the deflection side is movable in the deflection direction parallel to a guidance section (131, 151, 171, 191), wherein in particular means (127, 167, 187, 192) for exerting a driving force onto the piece good (4) are arranged on the guidance element.

## Revendications

1. Procédé pour transporter une à une des marchandises (4), les marchandises (4) étant transportées une à une dans une première direction de transport (F1) le long d'une piste de transport, sur une surface de transport formée par l'organe de transport (109) d'un ensemble de transport (102),
au moins certaines marchandises (4') étant déviées hors de la première direction de transport (F1) par des éléments de guidage de deux organes de déviation (105, 106) d'un ensemble de déviation (108) et étant transférées à un ensemble de reprise (103),
les éléments de guidage formant avec la direction de transport (F1) un angle de 10° à 80° dans la position de déviation des organes de déviation (105, 106),
un premier organe de déviation (105) de l'ensemble de déviation (108) étant déplacé d'un premier côté, depuis une position initiale dans la piste de transport des marchandises (4) pour dévier une marchandise (4'), la marchandise (4') étant ainsi déviée hors de la première direction de transport (F1),
un deuxième organe de déviation (106) de l'ensemble de déviation (108), qui coopère avec le premier organe de déviation (105), étant déplacé d'un deuxième côté opposé au premier hors d'une position initiale, dans la piste de transport des marchandises (4), la marchandise (4') déviée par le premier organe de déviation (105) se rendant dans l'ensemble de transfert (103),
le premier et le deuxième organe de déviation (106) étant des éléments de translation qui sont déplacés dans un déplacement de translation dans la piste de transport des marchandises (4),
**caractérisé en ce que**
la direction (R1, R2) du déplacement de translation est perpendiculaire à la direction de transport (F1) de l'ensemble de transport (102).

2. Procédé selon la revendication 1, **caractérisé en ce que** le premier organe de déviation (105) est déplacé par un premier côté dans la piste de transport des marchandises (4) et dévie une marchandise (4') et **en ce que** le deuxième organe de déviation (106) est déplacé en décalage temporel du deuxième côté, opposé, dans la piste de transport des marchandises (4), la marchandise (4') déviée se rendant vers l'ensemble de reprise (103).

3. Procédé selon la revendication 2, **caractérisé en ce que** le premier organe de déviation (105) est renvoyé depuis la piste de transport des marchandises (4) jusque dans une position initiale pendant que le deuxième organe de déviation (106) envoie vers l'ensemble de reprise (103) la marchandise (4') qui été déviée.

4. Procédé selon les revendications 2 ou 3, **caractérisé en ce que** le deuxième organe de déviation (106) est renvoyé depuis la piste de transport des marchandises (4) jusque dans une position initiale dès que la marchandise (4') qui a été déviée a été transférée à l'ensemble de reprise (103).

5. Installation de transport (101), en particulier conçue pour mettre en oeuvre le procédé selon les revendications 1 à 4, et présentant
un ensemble de transport (102) qui transporte une à une des marchandises (4) le long d'une piste de transport dans une première direction de transport (F1),
l'ensemble de transport (102) contenant un organe de transport (109) qui forme une surface de transport pour les marchandises (4),
un ensemble de déviation (108) qui dévie au moins certaines marchandises (4') transportées le long de la piste de transport depuis la première direction de transport (F1),
l'ensemble de déviation (108) contenant un premier et un deuxième organe de déviation (105; 106) qui présentent au moins un élément de guidage,
les éléments de guidage formant avec la direction de transport (F1) un angle de 10° à 80° lorsque les organes de déviation (105, 106) sont en position de déviation,
le premier organe de déviation (105) pouvant être déplacé depuis une position initiale d'un premier côté dans la piste de transport des marchandises (4) pour dévier certaines marchandises (4') hors de la première direction de transport (F1) et le deuxième organe de déviation (106) pouvant être déplacé depuis une position initiale par un deuxième côté opposé au premier dans la piste de transport des marchandises (4) pour coopérer avec le premier organe de déviation (105) et pour amener à un ensemble de reprise (103) les marchandises (4') déviées par le premier organe de déviation (105),
le premier et le deuxième organe de déviation (105; 106) étant configurés comme éléments de translation qui peuvent être déplacés dans la piste de transport des marchandises (4) au moyen d'un déplacement de translation,
**caractérisée en ce que**
le premier et le deuxième organe de déviation (105; 106) peuvent être déplacés dans une direction (R1, R2) perpendiculaire à la direction de transport (F1) de l'ensemble de transport (102).

6. Installation de transport selon la revendication 5, **caractérisée en ce que** l'ensemble de reprise (103) est disposé latéralement par rapport à l'ensemble de transport (102) et **en ce que** le deuxième organe de déviation (106) est disposé du côté de l'ensemble de reprise (103).

7. Installation de transport selon les revendications 5 ou 6, **caractérisée en ce que** l'élément de guidage du premier et/ou du deuxième organe de déviation (105, 106) contient un corps flexible en boucle fermée d'écartement (123, 143, 163, 183) qui peut être déplacé parallèlement à une section de guidage (131, 151, 171, 191) dans la direction de déviation sur le côté de déviation, des moyens (127, 167, 187, 192) exerçant une force d'entraînement sur les marchandises (4) étant disposés en particulier sur l'élément de guidage.
